(19) Europäisches Patentamt / European Patent Office / Office européen des brevets

(11) **EP 4 645 459 A2**

(12) **EUROPEAN PATENT APPLICATION**

(43) Date of publication:
**05.11.2025 Bulletin 2025/45**

(21) Application number: **25169158.0**

(22) Date of filing: **08.04.2025**

(51) International Patent Classification (IPC):
*H01M 4/36* (2006.01)    *H01M 4/505* (2010.01)
*H01M 4/525* (2010.01)    *H01M 4/58* (2010.01)
*C01G 53/00* (2025.01)    *H01M 4/131* (2010.01)
*H01M 10/0525* (2010.01)    *H01M 4/62* (2006.01)

(52) Cooperative Patent Classification (CPC):
**H01M 4/36; C01G 53/00; H01M 4/131; H01M 4/364;
H01M 4/505; H01M 4/525; H01M 4/5825;
H01M 10/0525;** H01M 4/621; H01M 4/624

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **29.04.2024 KR 20240056995**

(71) Applicant: **SAMSUNG SDI CO., LTD.
Yongin-si, Gyeonggi-do 17084 (KR)**

(72) Inventors:
 • **KIM, Young-Ki
 17084 Yongin-si (KR)**

 • **CHOI, Aram
 17084 Yongin-si (KR)**
 • **KIM, Sangmi
 17084 Yongin-si (KR)**
 • **DOO, Sungwook
 17084 Yongin-si (KR)**
 • **KANG, Gwiwoon
 17084 Yongin-si (KR)**
 • **LEE, Soonrewl
 17084 Yongin-si (KR)**

(74) Representative: **Marks & Clerk LLP
15 Fetter Lane
London EC4A 1BW (GB)**

(54) **POSITIVE ELECTRODE ACTIVE MATERIAL FOR RECHARGEABLE LITHIUM BATTERY, POSITIVE ELECTRODE INCLUDING THE SAME, AND RECHARGEABLE LITHIUM BATTERY INCLUDING THE SAME**

(57) A positive electrode, including a current collector, a first positive electrode active material layer on the current collector, and a second positive electrode active material layer on the first positive electrode active material layer is disclosed. The first positive electrode active material layer includes a first particle including a compound represented by Formula 1 having an olivine structure, and a second particle including a compound represented by Formula 2 having a spinel structure. The second positive electrode active material layer includes a third particle including a compound represented by Formula 3 having an olivine structure. The first particle may be in the form of a secondary particle in which a plurality of primary particles are aggregated. Also disclosed is a rechargeable lithium battery including the same.

FIG. 6

10

ATL2 ⎫
ATL1 ⎬ AML1
COL1

EP 4 645 459 A2

**Description**

**BACKGROUND**

**1. Field**

The present invention relates to a positive electrode active material for a rechargeable lithium battery, a positive electrode including the same, and a rechargeable lithium battery including the same. More particularly, the present invention relates to a positive electrode active material including an olivine-based lithium compound, a positive electrode active material including a spinel-based lithium compound, a positive electrode including the same, and a rechargeable lithium battery including the same.

**2. Description of the Related Art**

Lately, the rapid spread of battery-powered electronics, such as mobile phones, laptop computers, and electric vehicles, has driven a sharp rise in demand for rechargeable batteries provided having high energy density and high capacity. Accordingly, extensive research efforts are directed towards improving the performance of rechargeable lithium batteries.

Rechargeable lithium batteries include a positive electrode and a negative electrode, each including an active material that allows intercalation and deintercalation of lithium ions, and an electrolyte solution, and produce electrical energy from redox reactions that take place as lithium ions are intercalated into or deintercalated from the positive electrode and the negative electrode.

**SUMMARY**

The present invention provides a positive electrode active material that is economical and has high energy density, high average voltage, and excellent lifetime.

The present invention also provides a positive electrode that is economical and has high energy density, high average voltage, and excellent lifetime.

In a first aspect the present invention provides a positive electrode for a rechargeable lithium battery, including a current collector, a first positive electrode active material layer on the current collector, and a second positive electrode active material layer on the first positive electrode active material layer.

The first positive electrode active material layer includes a first particle including a compound represented by Formula 1 below and having an olivine structure, and a second particle including a compound represented by Formula 2 below and having a spinel structure, the second positive electrode active material layer includes a third particle including a compound represented by Formula 3 below and having an olivine structure, and the first particle is in the form of a secondary particle in which a plurality of primary particles are aggregated (e.g., agglomerated).

$$\text{Formula 1} \qquad Li_{a1}Mn_{z1}Fe_{x1}B1_{y1}PO_{4-c1}$$

In Formula 1 above, B1 is at least one element selected from the group consisting of Al, Ti, V, and Mg, and $0.8 < a1 \leq 1.2$, $0.4 \leq z1 \leq 0.8$, $0.2 \leq x1 \leq 0.6$, $0 \leq y1 \leq 0.05$ (e.g., $0.001 \leq y1 \leq 0.05$), and $0 \leq c1 \leq 0.05$ are satisfied.

$$\text{Formula 2} \qquad Li_{a2}Mn_{x2}B2_{y2}O_{4-c2}$$

In Formula 2 above, B2 is at least one element selected from the group consisting of Al and Mg, and $0.8 < a2 \leq 1.2$, $1.9 \leq x2 \leq 2.05$, $0 \leq y2 \leq 0.05$ (e.g., $0.001 \leq y2 \leq 0.05$), and $0 \leq c2 \leq 0.05$ are satisfied.

$$\text{Formula 3} \qquad Li_{a3}Mn_{z3}Fe_{x3}B3_{y3}PO_{4-c3}$$

In Formula 3 above, B3 is at least one element selected from the group consisting of Al, Ti, V, and Mg, and $0.8 < a3 \leq 1.2$, $0.4 \leq z3 \leq 0.8$, $0 \leq x3 \leq 0.6$, $0 \leq y3 \leq 0.05$ (e.g., $0.001 \leq y3 \leq 0.05$), and $0 \leq c3 \leq 0.05$ are satisfied.

At least some of the above and other features of the invention are set out in the claims.

**BRIEF DESCRIPTION OF THE DRAWINGS**

The accompanying drawings are included to provide a further understanding of embodiments the present disclosure, and are incorporated in and constitute a part of this specification. The drawings illustrate embodiments of the present disclosure and, together with the description, serve to explain principles of the subject matter of the present disclosure. In the drawings:

FIG. 1 is a simplified conceptual view showing a rechargeable lithium battery according to embodiments of the present disclosure;

FIGS. 2-5 are schematic views showing a rechargeable lithium battery according to an embodiment, and FIG. 2 shows a cylindrical battery, FIG. 3 shows a prismatic battery, and FIGS. 4-5 show pouch-type batteries;

FIG. 6 is a cross-sectional view showing a positive electrode for a rechargeable lithium battery according to embodiments of the present disclosure;

FIG. 7 is an enlarged view showing a first positive electrode active material layer of a rechargeable lithium battery according to embodiments of the present disclosure;

FIGS. 8A-8B are each an enlarged view showing a second positive electrode active material layer of a rechargeable lithium battery according to embodiments of the present disclosure;

FIG. 9 is a pair of scanning electron microscope (SEM) images showing a first particle according to an embodiment of the present disclosure;

FIG. 10 is a pair of SEM images showing a second particle according to an embodiment of the present disclosure;

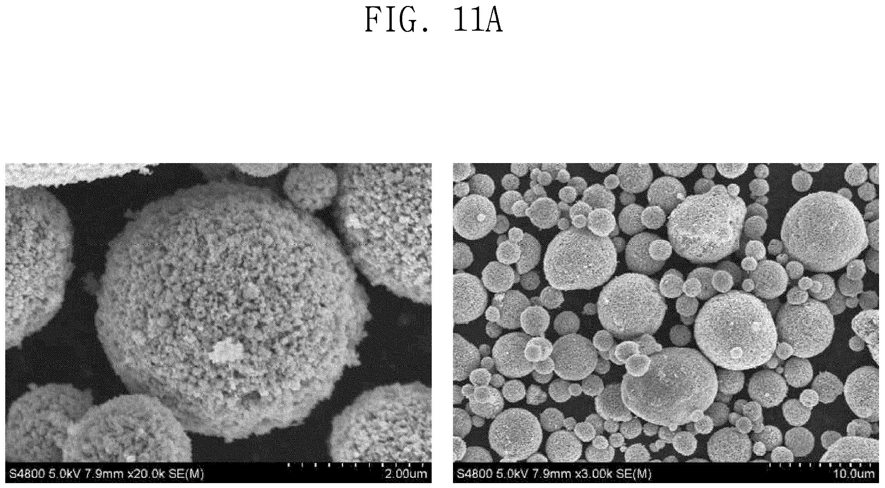

FIG. 11A is a pair of SEM images showing a third particle according to an embodiment of the present disclosure; and

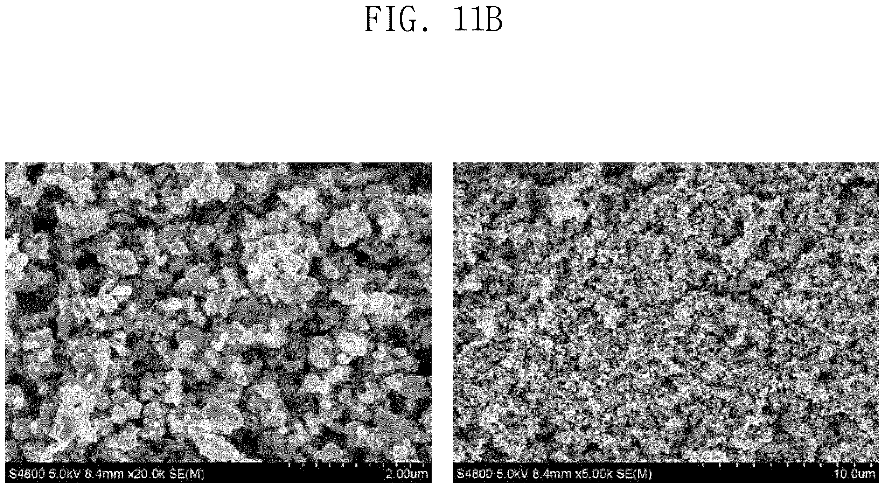

FIG. 11B is a pair of SEM images showing a third particle according to an embodiment of the present disclosure.

## DETAILED DESCRIPTION

Hereinafter, embodiments of the present disclosure will be described clearly and in more detail to such an extent that those skilled in the art easily implement the subject matter of the present disclosure. In order to sufficiently understand the configuration and effects of the subject matter of the present disclosure, example embodiments of the present disclosure will be described with reference to the accompanying drawings. It should be noted, however, that the present disclosure is not limited to the following embodiments, and may be implemented in various suitable forms and variously modified. The embodiments herein are provided so that the present disclosure will be thorough and complete and will fully convey the scope of the present disclosure to those having ordinary skill in the art.

Herein, it will be understood that if a component is referred to as being on another component, the component may be directly on another component, or an intervening third component may be present. In embodiments, in the drawings, thicknesses of some components may be exaggerated to effectively describe technical contents of the present disclosure. Like reference numerals refer to like elements throughout.

Unless otherwise specified herein, the expression of a singular form may include the expression of a plural form. In embodiments, unless otherwise specified, the phrase "A or B" may indicate "A but not B", "B but not A", or "A and B". The terms "comprises" and/or "comprising" used herein do not exclude the presence or addition of one or more other components.

As used herein, the term "combination thereof" may refer to a mixture, a stack, a composite, a copolymer, an alloy, a blend, and/or a reaction product.

Unless otherwise defined herein, a particle diameter may be an average particle diameter. In embodiments, a particle diameter is defined as an average particle diameter ($D_{50}$) indicating the diameter of particles having a cumulative volume of 50 volume% in a particle size distribution. The average particle diameter ($D_{50}$) may be measured by any suitable method generally used in the art, for example, by a particle size analyzer, a transmission electron micrograph, and/or a scanning electron micrograph. In embodiments, an average particle diameter ($D_{50}$) value may be obtained by measuring a subject using a dynamic light-scattering-based measuring device, performing data analysis, counting the number of particles for each particle size range, and then calculating the value therefrom. In embodiments, the average particle diameter ($D_{50}$) may be measured using a laser diffraction method. In the measuring using the laser diffraction method, for example, target particles are distributed in a distribution solvent, introduced into a commercially available laser diffraction particle diameter measuring device (e.g., MT 3000 available from Microtrac, Ltd.), irradiated with ultrasonic waves of about 28 kHz at a power of 60 W, and then an average particle diameter ($D_{50}$) based on 50% of the particle diameter distribution in the measuring device may be calculated.

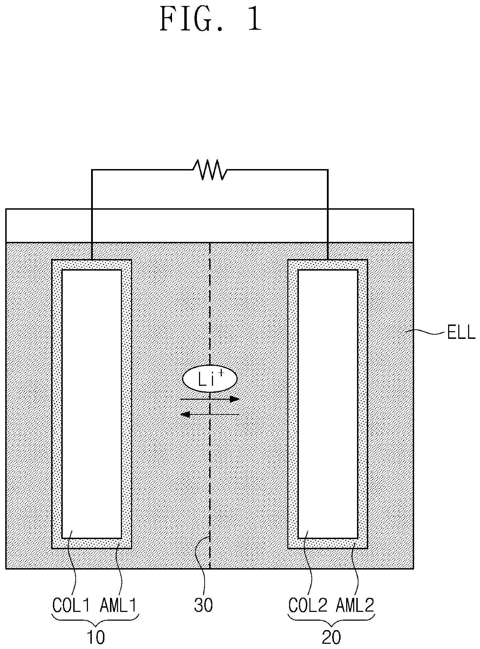

FIG. 1 is a simplified conceptual view showing a rechargeable lithium battery according to embodiments of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other by the separator 30. The separator 30 may be disposed between the positive electrode 10 and the negative electrode 20. The positive electrode 10, the negative electrode 20 and the separator 30 may be in contact with the electrolyte solution ELL. The positive electrode 10, the negative electrode 20 and the separator 30 may be impregnated in the electrolyte solution ELL.

The electrolyte solution ELL may be a medium for transferring lithium ions between the positive electrode 10 and the negative electrode 20. In the electrolyte solution ELL, the lithium ions may move through the separator 30 toward the positive electrode 10 or the negative electrode 20.

**Positive Electrode 10**

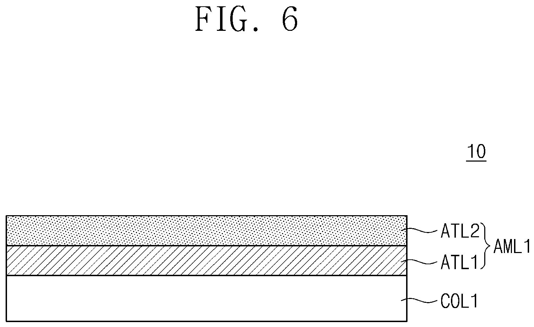

The positive electrode 10 for a rechargeable lithium battery includes a current collector COL1 and a positive electrode active material layer AML1 on the current collector. The positive electrode active material layer AML1 includes a positive electrode active material and may further include a binder and/or a conductive material (e.g., an electrically conductive material). A detailed description of the positive electrode active material layer AML1 according to embodiments of the present disclosure will be further described below with respect to FIG. 6. Al may be used as the current collector COL1, but embodiments of the present disclosure are not limited thereto.

**Negative Electrode 20**

The negative electrode 20 for a rechargeable lithium battery may include a current collector COL2 and a negative electrode active material layer AML2 on the current collector COL2. The negative electrode active material layer AML2 may include a negative electrode active material, and may further include a binder and/or a conductive material (e.g., an electrically conductive material).

For example, the negative electrode active material layer AML2 may include about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles well to each other and also to attach the negative electrode active material well to the current collector COL2. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, poly-amideimide, polyimide, or a combination thereof.

The aqueous binder may be selected from a styrene-butadiene rubber, a (meth)acrylated styrene-butadiene rubber, a (meth)acrylonitrile-butadiene rubber, a (meth)acrylic rubber, a butyl rubber, a fluoro rubber, polyethylene oxide, polyvinylpyrrolidone, polyepichlorohydrin, polyphosphazene, poly(meth)acrylonitrile, an ethylene-propylene-diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material may be used to impart conductivity (e.g., electrical conductivity) to the electrode. Any material that does not cause chemical change (e.g., does not cause an undesirable chemical change in the rechargeable lithium battery) and that conducts electrons can be used in the battery. Non-limiting examples thereof may include a carbon-based material such as natural graphite, artificial graphite, carbon black, acetylene black, ketjen black, a carbon fiber, a carbon nanofiber, and a carbon nanotube; a metal-based material including copper, nickel, aluminium, silver, etc. in a form of a metal powder or a metal fiber; a conductive polymer such as a polyphenylene derivative; or a mixture thereof.

The current collector COL2 may include a copper foil, a nickel foil, a stainless steel foil, a titanium foil, a nickel foam, a copper foam, a polymer substrate coated with a conductive metal, or a combination thereof.

**Negative Electrode Active Material**

The negative electrode active material in the negative electrode active material layer AML2 may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon or a combination thereof. Examples of the crystalline carbon may be graphite such as irregular, planar, flaky, spherical, or fibrous natural graphite or artificial graphite, and examples of the amorphous carbon may be soft carbon (low-temperature fired carbon), hard carbon, mesophase pitch carbide, fired cokes, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOx (0 < x < 2), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, $SnO_2$, a Sn-based alloy, or a combination thereof.

The silicon-carbon composite may be a composite of silicon and amorphous carbon. According to an embodiment, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

**Separator 30**

Depending on the type of the rechargeable lithium battery, the separator 30 may be present between the positive electrode 10 and the negative electrode 20. The separator 30 may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate and a coating layer including an organic material, an inorganic material, or a combination thereof on one or both surfaces of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g. TEFLON), or a copolymer or mixture of two or more thereof.

The organic material may include a polyvinylidene fluoride-based polymer or a (meth)acrylic polymer.

The inorganic material may include inorganic particles selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed in one coating layer, or a coating layer including an organic material and a coating layer including an inorganic material may be stacked.

**Electrolyte Solution ELL**

The electrolyte solution ELL for a rechargeable lithium battery may include a non-aqueous organic solvent and a lithium salt.

The non-aqueous organic solvent may serve as a medium for transmitting ions taking part in the electrochemical reaction of a battery.

The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), fluoroethylene carbonate (FEC), propylene carbonate (PC), butylene carbonate (BC), and the like.

The ester-based solvent may include methyl acetate, ethyl acetate, n-propyl acetate, dimethyl acetate, methyl propionate, ethyl propionate, decanolide, mevalonolactone, valerolactone, caprolactone, and the like.

The ether-based solvent may include dibutyl ether, tetraethylene glycol dimethyl ether (tetraglyme), bis(2-methoxyethyl) ether (diglyme), dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether bond), and the like; amides such as dimethylformamide; dioxolanes such as 1,3-dioxolane, 1,4-dioxolane, and the like; sulfolanes, and the like.

The non-aqueous organic solvents may be used alone or in combination of two or more.

In addition, when using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from $LiPF_6$, $LiBF_4$, $LiSbF_6$, $LiAsF_6$, $LiClO_4$, $LiAlO_2$, $LiAlCl_4$, $LiPO_2F_2$, LiCl, Lil, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)$ $(C_yF_{2y+1}SO_2)$ (wherein x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato) borate (LiBOB).

## Rechargeable Lithium Battery

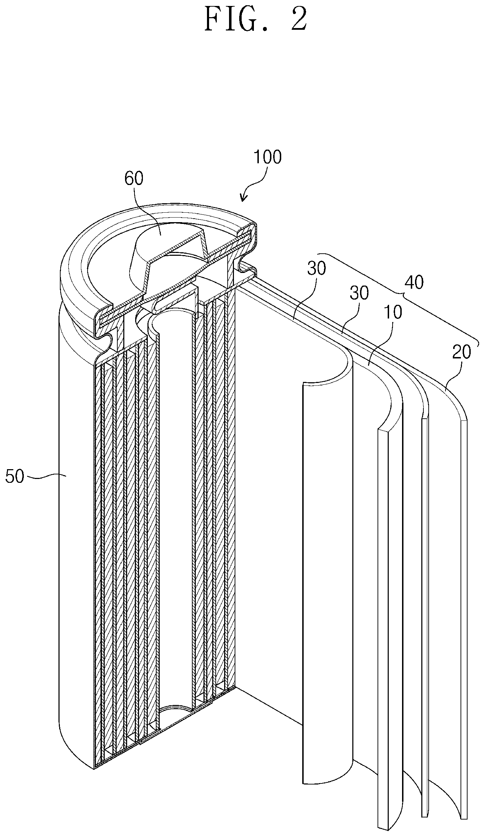

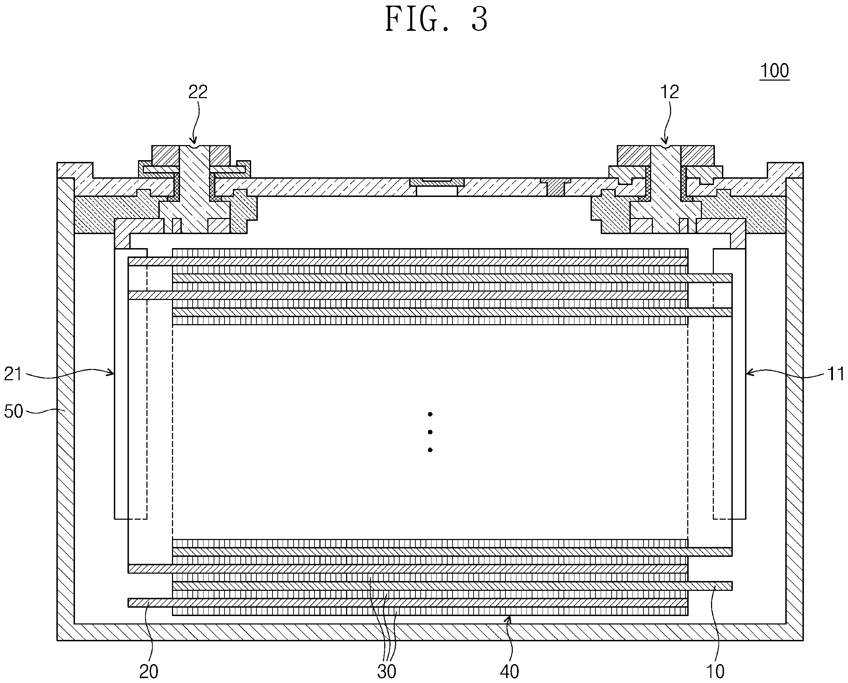

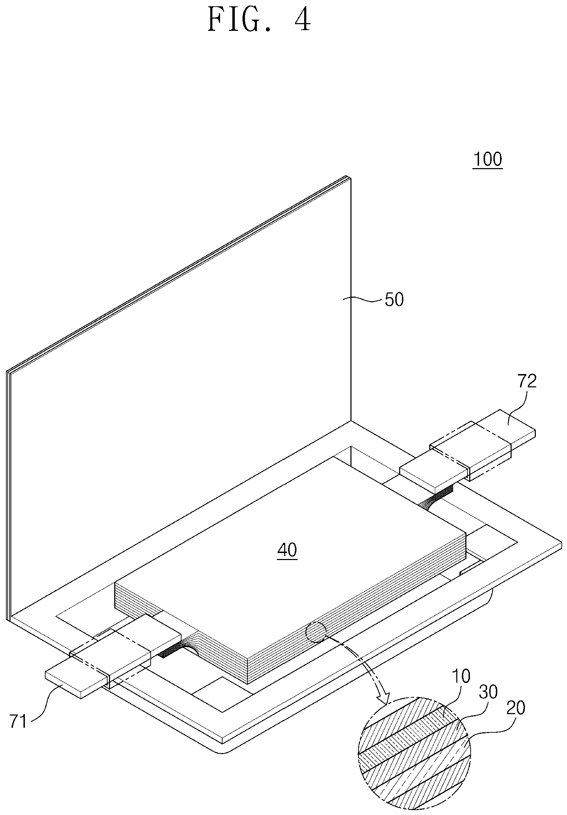

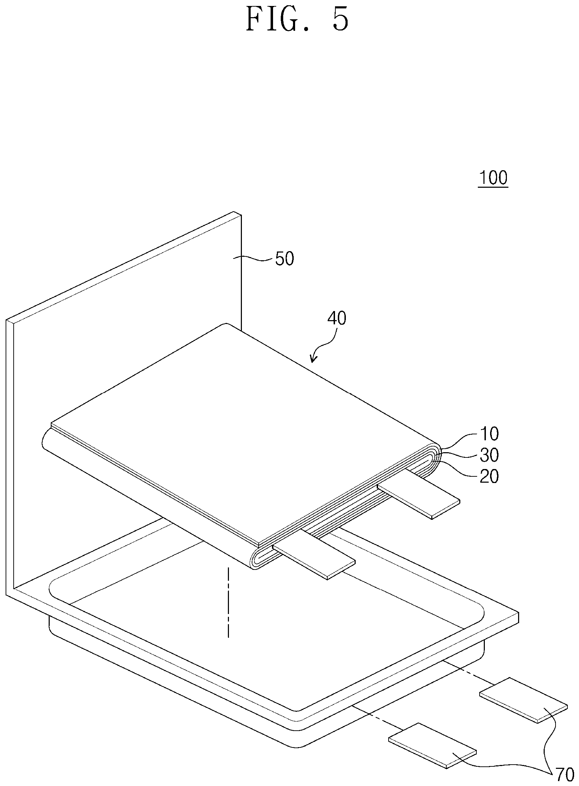

The rechargeable lithium battery may be classified into cylindrical, prismatic, pouch, or coin-type batteries, and the like depending on their shape. FIGS. 2 to 5 are schematic views illustrating a rechargeable lithium battery according to an embodiment. FIG. 2 shows a cylindrical battery, FIG. 3 shows a prismatic battery, and FIGS. 4 and 5 show pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive electrode lead tab 11, a positive terminal 12, a negative electrode lead tab 21, and a negative terminal 22. As shown in FIGS. 4 and 5, the rechargeable lithium battery 100 may include an electrode tab 70, which may be, for example, a positive electrode tab 71 and a negative electrode tab 72 serving as an electrical path for inducing the current formed in the electrode assembly 40 to the outside.

The rechargeable lithium battery according to an embodiment may be applied to automobiles, mobile phones, and/or various types of electric devices, as non-limiting examples.

FIG. 6 is a cross-sectional view showing a positive electrode for a rechargeable lithium battery according to embodiments of the present disclosure. Referring to FIG. 6, the positive electrode 10 for a rechargeable lithium battery includes the current collector COL1 (see FIG. 1) and the positive electrode active material layer AML1 (see FIG. 1) as described above. The positive electrode active material layer AML1 includes a first positive electrode active material layer ATL1, and a second positive electrode active material layer ATL2 stacked on the first positive electrode active material layer ATL1.

Hereinafter, each of the first positive electrode active material layer ATL1 and the second positive electrode active material layer ATL2 will be described in more detail.

## First Positive Electrode Active Material Layer ATL1

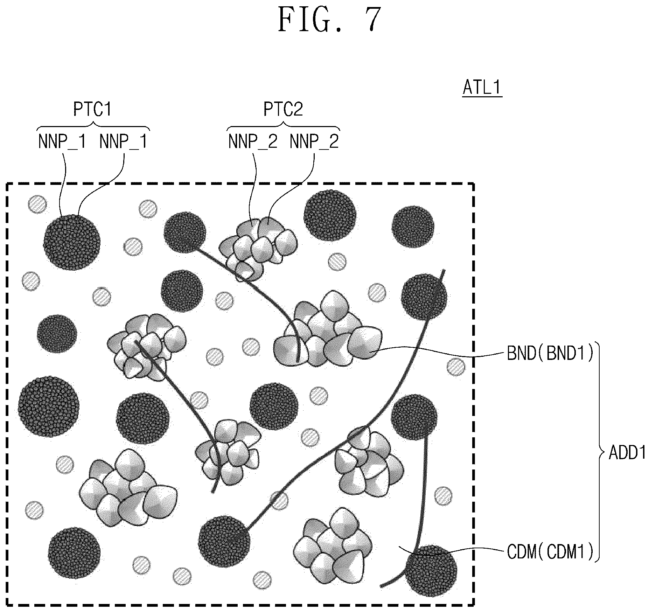

FIG. 7 is an enlarged view showing a first positive electrode active material layer ATL1 of a positive electrode for a rechargeable lithium battery according to embodiments of the present disclosure.

The first positive electrode active material layer ATL1 includes a first particle PTC1, a second particle PTC2, and may include a first functional additive ADD1. The first functional additive ADD1 includes a first binder BND1 and a first conductive material CDM1 (e.g., a first electrically conductive material CDM1).

The first binder BND1 may combine (e.g., may adhere together) the first particle PTC1 and the first conductive material CDM1. In embodiments, the first binder BND1 may stably fix the first positive electrode active material layer ATL1 to the current collector COL1. For example, the first binder BND1 may include at least one selected from the group consisting of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but is not limited thereto.

The first conductive material CDM1 may be used to improve conductivity (e.g., electrical conductivity) of the first positive electrode active material layer ATL1. Any suitable conductive material that does not cause chemical changes (e.g., that does not cause an undesirable chemical change) in the first positive electrode active material layer ATL1 may be used as the first conductive material CDM1 without limitation. For example, the first conductive material CDM1 may include a carbon-based material such as natural graphite, artificial graphite, carbon black, acetylene black, ketjen black, a carbon fiber, a carbon nanofiber, and/or a carbon nanotube; a metal-based material including copper, nickel, aluminium, silver, etc. in a form of a metal powder and/or a metal fiber; a conductive polymer (e.g., an electrically conductive polymer) such as a polyphenylene derivative; or a mixture thereof.

Hereinafter, each of the first particle PTC1 and the second particle PTC2 in the first positive electrode active material layer ATL1 will be described in more detail.

**First Particle PTC1**

The first particle PTC1 includes an olivine-based lithium compound represented by Formula 1 below.

$$\text{Formula 1} \qquad Li_{a1}Mn_{z1}Fe_{x1}B1_{y1}PO_{4-c1}$$

In Formula 1 above, $0.8 < a1 \leq 1.2$, $0.4 \leq z1 \leq 0.8$, $0.2 \leq x1 \leq 0.6$, $0 \leq y1 \leq 0.05$ (e.g., $0.001 \leq y1 \leq 0.05$), and $0 \leq c1 \leq 0.05$ are satisfied. B1 is at least one element selected from the group consisting of Al, Ti, V, and Mg. B1 is a dopant with which the first particle PTC1 is doped. For example, B1 may include Ti.

The first particle PTC1 may further include carbon derived from the positive electrode active material layer AML1 described above. The first particle PTC1 may have a carbon element content of about 0.5 wt% to about 5 wt%, about 0.5 wt% to about 3 wt%, or about 0.5 wt% to about 2 wt%. Methods for measuring the carbon content dispersed on the surface or inside positive electrode active material may include Thermogravimetric Analysis (TGA), Elemental Analysis (CHNS), Raman Spectroscopy, X-ray Photoelectron Spectroscopy (XPS), Energy Dispersive X-ray Spectroscopy (EDS), and Transmission Electron Microscopy (TEM) with Electron Energy Loss Spectroscopy (EELS).

The first particle PTC1 may be in the form of a single particle. Herein, the single particle may indicate a single type (or kind) of particle having no grain boundary inside thereof. The single particle may indicate one single particle morphologically present in an independent phase in which particles are not aggregated with one another, a particle having a monolith structure, a particle having a one-body structure, or a non-aggregated particle. For example, the single particle may be a single crystal. In embodiments, the single particle may be a particle including several crystals. The single particle may be in an isolated form. In embodiments, the single particle may be in the form in which about 2 to about 100 first primary particles NNP_1 are attached to one another.

The first particle PTC1 may be a nanomorphous positive electrode active material. The first particle PTC1 may include at least one first primary particle NNP_1. In an embodiment, the first particle PTC1 may be in the shape of a sphere or an oval (e.g., may have a generally spherical shape or a generally ovoid shape) in which first primary particles are aggregated (e.g., agglomerated). In another embodiment, the first particle PTC1 may not have a spherical shape but have an irregular shape even if the first primary particles NNP_1 agglomerate.

In an embodiment, the average particle diameter may indicate a particle diameter ($D_{50}$) if a cumulative volume is about 50 volume% in a particle size distribution. In an embodiment, the average particle diameter ($D_{50}$) of the first particle PTC1 may be a value measured using a particle size analyzer.

In an embodiment, the first particle PTC1 may have an average particle diameter of about 500 nm to about 2.5 $\mu$m, or about 1 $\mu$m. The size of at least one first primary particle NNP_1 constituting the first particle PTC1 may be measured using a scanning electron microscope (SEM). In an embodiment, the size of the first primary particle NNP_1 may indicate a diameter measured by randomly selecting about 30 first primary particles NNP_1 from an electron micrograph of a positive electrode active material. The first primary particle NNP_1 may be uniform (e.g., substantially uniform) in size. The first primary particle NNP_1 may have a size of about 100 nm to about 500 nm, or about 100 nm to about 200 nm.

The first particle PTC1 is in the form of polycrystal and may include secondary particles in which at least two first primary particles NNP_1 are aggregated. For example, one first particle PTC1 may include a plurality of first primary particles NNP_1 aggregated together. The first particle PTC1 including the plurality of first primary particles NNP_1 may be in the shape of a sphere or an oval (e.g., may have a generally spherical shape or a generally ovoid shape).

In an embodiment, the average particle diameter may indicate a particle diameter ($D_{50}$) if a cumulative volume is about 50 volume% in a particle size distribution. In an embodiment, the average particle diameter ($D_{50}$) of the first particle PTC1 may be a value measured using a particle size analyzer.

The first particle PTC1 including at least one first primary particle NNP_1 may have an average particle diameter of about 500 nm to about 5 $\mu$m, about 100 nm to about 3 $\mu$m, about 500 nm to about 2.5 $\mu$m, about 3 $\mu$m to about 7 $\mu$m, about 4 $\mu$m to about 6 $\mu$m, or about 5 $\mu$m. The average particle diameter ($D_{50}$) of the first particle PTC1 may be smaller than an average particle diameter ($D_{50}$) of the second particle PTC2, which will be further described below.

The first particle PTC1 may include at least one primary particle (or single particle). The size of at least one first primary particle NNP_1 constituting the first particle PTC1 may be measured using a scanning electron microscope (SEM). In an embodiment, the size of the first primary particle NNP_1 may indicate a diameter measured by randomly selecting about 30 first primary particles NNP_1 from an electron micrograph of a positive electrode active material. The first primary particle NNP_1 may be uniform (e.g., substantially uniform) in size.

At least one first primary particle NNP_1 constituting the first particle PTC1 may have a size of about 100 nm to about 200 nm, about 50 nm to about 150 nm, about 50 nm to about 100 nm, about 100 nm to about 150 nm, or about 200 nm to about 300 nm.

In an embodiment, the first particle PTC1 may include a coating layer on a surface thereof. The coating layer may entirely cover the surface of the first particle PTC1, or may partially cover the surface of the first particle PTC1. For example, the coating layer may include carbon and/or a carbon-containing compound. The coating layer may further include at least one selected from the group consisting of an aluminium-containing compound, a titanium-containing compound, a magnesium-containing compound, and a vanadium-containing compound. Metal-containing compounds, such as titanium-containing compounds, magnesium-containing compounds, and vanadium-containing compounds, may be, for example, metal oxides, metal hydroxides, metal carbonates, composites thereof, or mixtures thereof. The metal-containing compounds may further include other metals and/or non-metallic elements. For example, the metal-containing compounds may further include lithium. The first particle PTC1 may have improved structural stability and electrical conductivity through the coating layer.

In an embodiment, the first particle PTC1 may further include a grain boundary coating layer on a surface of each of the first primary particles NNP_1. The grain boundary coating layer may be present inside the first particle PTC1. The grain boundary coating layer may be formed to be applied along an interface between the first primary particles NNP_1 inside the first particle PTC1. For example, the grain boundary coating layer may indicate a material applied onto a grain boundary inside the first particle PTC1.

The grain boundary coating layer may include carbon and/or a carbon-containing compound. The grain boundary coating layer may further include at least one selected from the group consisting of a titanium-containing compound, a magnesium-containing compound, and a vanadium-containing compound.

The inside of the first particle PTC1 described above may indicate the entire inside portion of the first particle PTC1 excluding the surface of the first particle PTC1. For example, the inside of the first particle PTC1 may indicate a region of the entire inside from about 10 nm in depth, or from about 10 nm to about 2 $\mu$m in depth, with respect to the surface of the first particle PTC1.

The first particle PTC1 may further include a grain boundary coating portion, and may thus have greater structural stability and have a uniform (e.g., substantially uniform) coating layer formed on the surface thereof. In embodiments, the first particle PTC1 may further include a grain boundary coating portion, and may thus have further improved electrical conductivity.

The first particle PTC1 may further include carbon derived from the coating layer and/or the grain boundary coating layer described above. The first particle PTC1 may have a carbon element content of about 0.5 wt% to about 10 wt%, about 1 wt% to about 3 wt%, or about 1.5 wt% to about 2.5 wt%. For example, the first particle PTC1 may have a greater content of carbon if in the form of a secondary particle than in the form of a single particle. Methods for measuring the carbon content dispersed on the surface or inside positive electrode active material may include Thermogravimetric Analysis (TGA), Elemental Analysis (CHNS), Raman Spectroscopy, X-ray Photoelectron Spectroscopy (XPS), Energy Dispersive X-ray Spectroscopy (EDS), and Transmission Electron Microscopy (TEM) with Electron Energy Loss Spectroscopy (EELS).

The first particle PTC1 may be in the shape of sphere (e.g., may have a generally spherical shape) in which a plurality of first primary particles NNP_1 are aggregated. The first particle PTC1 has the first primary particles NNP_1 closely aggregated, may thus exhibit the following characteristics. The first particle may keep the coating layer and/or the grain boundary coating layer described above well, and may thus have greater electrical conductivity and improved low-temperature characteristics. Due to the increased bindability of an electrode plate, binder capacity may be reduced. The first particle PTC1 may be in the shape of a sphere or an oval (e.g., may have a generally spherical shape or a generally ovoid shape).

The first particle PTC1 may have a porosity of about 20% to about 40%. Porosity (n) may be defined as the pore volume ($V_p$) divided by the total volume (Vt) of a particle (n = $V_p$/ Vt). The porosity of the active material particles may be measured using BET (Brunauer-Emmett-Teller) analysis, which determines the specific surface area and pore structure based on gas adsorption. By measuring the amount of gas adsorbed on the material's surface at different pressures, the BET method calculates the specific surface area (SSA) and, when combined with BJH (Barrett-Joyner-Halenda) analysis, provides insights into pore size distribution and pore volume. This method is particularly useful for analyzing nanometer-scale pores (0.5-300 nm) and is widely applied in lithium-ion battery materials to evaluate electrolyte infiltration and ion diffusion pathways. Measurement methods commonly used in the battery field, such as those described above, can be applied. A Span value of the first particle PTC1, analyzed through a particle size analyzer, may be about 0.3 to about 0.75.

**Second Particle PTC2**

The second particle PTC2 includes a lithium compound having a spinel structure represented by Formula 2 below.

Formula 2 $\quad Li_{a2}Mn_{x2}B2_{y2}O_{4-c2}$

In Formula 2 above, $0.8 < a2 \leq 1.2$, $1.9 \leq x2 \leq 2.05$, $0 \leq y2 \leq 0.05$ (e.g., $0.001 \leq y2 \leq 0.05$), and $0 \leq c2 \leq 0.05$ are satisfied. B2 is at least one element selected from the group consisting of Al and Mg. B2 is a dopant with which the second particle PTC2 is doped. The dopant may have the effect of controlling the uniform (e.g., substantially uniform) growth of the second primary particles NNP_2 constituting the second particle PTC2 and improve charging/discharging efficiency, low-temperature characteristics, and lifetime characteristics of a rechargeable lithium battery. The second particle PTC2 is provided with benefits including high output characteristics, high structural stability, high average voltage, and excellent lifetime characteristics.

The second particle PTC2 has a spinel structure having a tetrahedral lattice structure and an octahedral lattice structure. The lattice structure has various passages, thereby allowing lithium ions to be easily intercalated/deintercalated, resulting in excellent output characteristics. The second particle PTC2 includes Mn, and may thus be structurally stable. This structural stability protects the electrochemical properties of particles even at high voltages, thereby allowing operation at high voltages and providing excellent lifetime characteristics.

The second particle PTC2 is lithium manganese oxide and may be a positive electrode material in which cobalt is replaced with manganese in lithium cobalt oxide. In an embodiment of the present disclosure, the second particle PTC2 may have a trace content of cobalt (Co), indicating substantially no content (e.g., such that the second particle PTC2 contains no or substantially cobalt (Co)). For example, the second particle PTC2 may have a cobalt (Co) content of about 100 ppm or less. The positive electrode active material according to the present disclosure is substantially free of cobalt (Co), thereby providing a rechargeable battery that is economical and has high capacity and operating voltage.

Referring to FIG. 7, the second particle PTC2 may be in the form of a polycrystal and may include secondary particles in which at least two second primary particles NNP_2 are aggregated. For example, one second particle PTC2 may include a plurality of second primary particles NNP_2 aggregated together. The second particle PTC2 including the plurality of second primary particles NNP_2 may be in the shape of an agglomerate sphere (e.g., a generally spherical agglomerated shape), and may have an irregular shape even if the second primary particles NNP_2 agglomerate.

In an embodiment, the average particle diameter may indicate a particle diameter ($D_{50}$) if a cumulative volume is about 50 volume% in a particle size distribution. In an embodiment, the average particle diameter ($D_{50}$) of the second particle PTC2 may be a value measured using a particle size analyzer. The second particle PTC2 may have an average particle diameter ($D_{50}$) of about 3 μm to about 20 μm, about 4 μm to about 15 μm, about 3 μm to about 10 μm, or about 5 μm to about 10 μm. For example, the second particle PTC2 may have an average particle diameter ($D_{50}$) of about 8 μm.

The second primary particles NNP_2 constituting the second particle PTC2 may have an average size of about 3 μm or less. For example, the second primary particles NNP_2 may have an average size of about 300 nm to about 3 μm, about 0.5 μm to about 3 μm, about 1 μm to about 3 μm, or about 2 μm to about 3 μm. In an embodiment, the size of the second primary particles may indicate a diameter measured by randomly selecting about 30 primary particles from an electron micrograph of a positive electrode active material. The second primary particles NNP_2 may be uniform (e.g., substantially uniform) in size. The second primary particles NNP_2 may have a greater average size than the first primary particles NNP_1. A difference in average size between the second primary particles NNP_2 and the first primary particles NNP_1 may be about 300 nm or greater.

In an embodiment, the second particle PTC2 may include a second coating layer on a surface thereof. The second particle PTC2 may include the second coating layer, and may thus effectively prevent or reduce structural collapse caused by repeated charging/discharging.

The second coating layer may include an aluminium-containing compound, a magnesium-containing compound, or a combination thereof. Metal-containing compounds in the second coating layer may be, for example, metal oxides, metal hydroxides, metal carbonates, composites thereof, or mixtures thereof. The metal-containing compounds may further include other metals and/or non-metallic elements. For example, the second coating layer may further include lithium, manganese, and/or nickel.

A method of measuring the metal content in the second coating layer of the second particle PTC2 may include performing scanning electron microscopy and energy dispersive X-ray spectroscopy (SEM-EDS) on the second particle PTC2. Through the analysis described above, the content of aluminium and/or magnesium in the second coating layer may be determined. In addition to, or alternatively to, SEM-EDS, methods of measuring the metal content in the second coating layer may include inductively coupled plasma-mass spectrometry (ICP-MS), inductively coupled plasma optical emission spectroscopy (ICP-OES), and/or the like.

The first positive electrode active material layer ATL1 includes a first particle and a second particle. In the first positive electrode active material layer ATL1, the second particle PTC2 may be less than the first particle PTC1 in weight.

The first particle PTC1 and the second particle PTC2 constituting the first positive electrode active material layer ATL1 include manganese (Mn).

The second particle PTC2 has a high content of manganese (Mn), and may thus improve the operating voltage of a rechargeable battery compared to the first particle PTC1. The second particle PTC2 has a spinel structure, and may thus have a stable crystal structure and excellent lifetime characteristics compared to the first particle PTC1. The second particle PTC2 may have low resistance (e.g., low electrical resistance). In embodiments, the second particle PTC2, which is a manganese-based oxide, is hardly usable alone due to low capacity and energy density.

The positive electrode active material layer according to the present embodiment has the first particle PTC1 and the second particle PTC2 mixed together in a suitable or appropriate ratio (for example, the manganese (Mn) content is regulated), and may thus have improved voltage and lifetime characteristics compared to batteries including general lithium iron phosphate-based compounds and/or lithium manganese iron phosphate-based compounds. A battery having long service life may be obtainable by mixing together the first particle PTC1 and the second particle PTC2 in a suitable or appropriate range. The battery also has improved energy density, and may thus have excellent performance for commercial use.

The positive electrode active material layer according to the present embodiment has the first particle PTC1 and the second particle PTC2 mixed together in a suitable or appropriate ratio, and may thus allow an electrode plate to be easily prepared. For example, compared to preparing a positive electrode active material layer including general lithium iron phosphate compounds, the second particle PTC2 having a greater average particle diameter is further included, and accordingly, the electrode plate may have increased bindability. As a result, a binder may be less required to prepare the electrode plate. The first positive electrode active material layer ATL1 including the second particle PTC2 having low resistance (e.g., low electrical resistance) is formed first, and accordingly, the electrode plate may have improved resistance (e.g., improved electrical resistance).

## Second Positive Electrode Active Material Layer ATL2

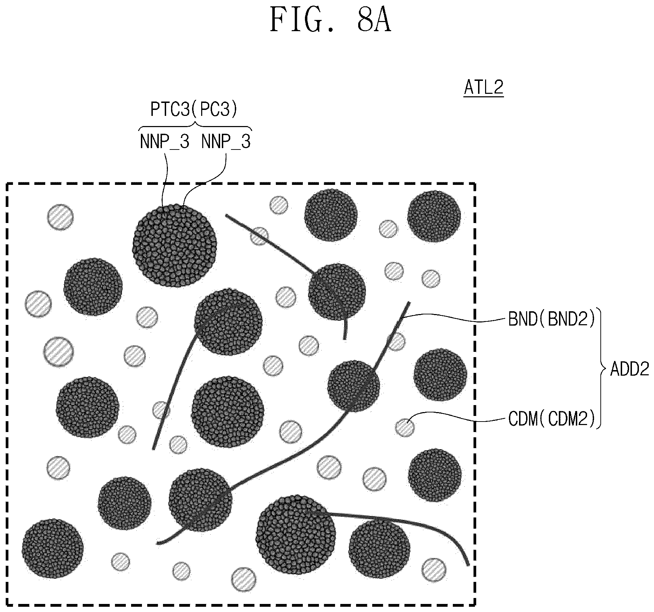

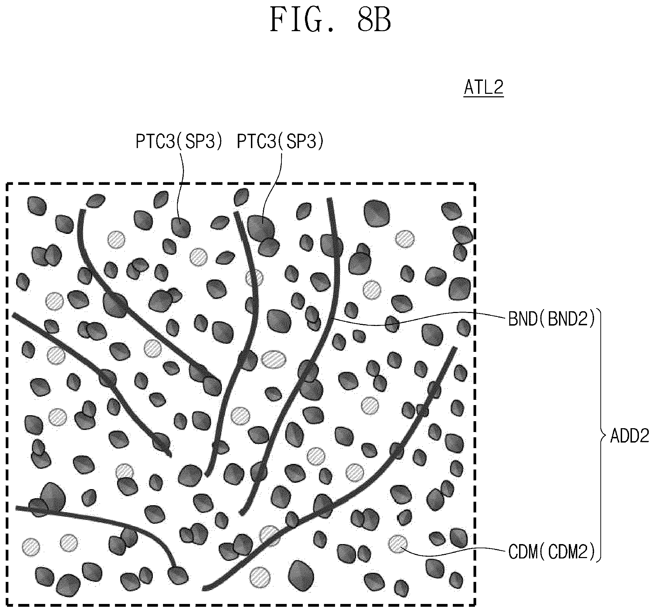

FIGS. 8A-8B are enlarged views showing a second positive electrode active material layer of a positive electrode for a rechargeable lithium battery according to embodiments of the present disclosure.

Referring to FIGS. 8A-8B, the second positive electrode active material layer ATL2 includes a third particle PTC3 and may include a second functional additive ADD2. The second functional additive ADD2 includes a second binder BND2 and a second conductive material CDM2 (e.g., a second electrically conductive material CDM2).

The second binder BND2 may combine the third particle PTC3 and the second conductive material CDM2. In embodiments, the second binder BND2 may stably fix the second positive electrode active material layer ATL2 onto the first positive electrode active material layer ATL1. In an embodiment, the second binder BND2 may include at least one selected from the group consisting of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but is not limited thereto.

The second conductive material CDM2 may be used to improve conductivity (e.g., electrical conductivity) of the second positive electrode active material layer ATL2. Any suitable conductive material that does not cause chemical changes (e.g., does not cause an undesirable chemical change) in the second positive electrode active material layer ATL2 may be used as the second conductive material CDM2 without limitation. In an embodiment, the second conductive material CDM2 may include a carbon-based material such as natural graphite, artificial graphite, carbon black, acetylene black, ketjen black, a carbon fiber, a carbon nanofiber, and/or a carbon nanotube; a metal-based material including copper, nickel, aluminium, silver, etc. in a form of a metal powder and/or a metal fiber; a conductive polymer (e.g., an electrically conductive polymer) such as a polyphenylene derivative; or a mixture thereof.

### Third Particle PTC3

The third particle PTC3 includes an olivine-based lithium compound represented by Formula 3 below.

$$\text{Formula 3} \qquad Li_{a3}Mn_{z3}Fe_{x3}B3_{y3}PO_{4-c3}$$

In Formula 3 above, $0.8 < a3 \leq 1.2$, $0.4 \leq z3 \leq 0.8$, $0 \leq x3 \leq 0.6$, $0 \leq y3 \leq 0.05$ (e.g., $0.001 \leq y3 \leq 0.05$), and $0 \leq c3 \leq 0.05$ are satisfied. B3 is at least one element selected from the group consisting of Al, Ti, V, and Mg. B3 is a dopant with which the third particle PTC3 is doped. For example, B3 may include Ti.

The third particle PTC3 may further include carbon derived from the positive electrode active material layer AML1 described above. The third particle PTC3 may have a carbon element content of about 0.5 wt% to about 5 wt%, about 0.5 wt% to about 3 wt%, or about 0.5 wt% to about 2 wt%. Methods for measuring the carbon content dispersed on the surface or inside positive electrode active material may include Thermogravimetric Analysis (TGA), Elemental Analysis (CHNS), Raman Spectroscopy, X-ray Photoelectron Spectroscopy (XPS), Energy Dispersive X-ray Spectroscopy (EDS), and Transmission Electron Microscopy (TEM) with Electron Energy Loss Spectroscopy (EELS).

The following descriptions are characteristics of embodiments of the third particle PTC3, such as particle shape, size, and particle diameter.

The third particle PTC3 may be in the form of a single particle. Herein, the single particle may indicate a single type (or kind) of particle having no grain boundary inside thereof. The single particle may indicate one single particle morphologically present in an independent phase in which particles are not aggregated with one another, a particle having a monolith structure, a particle having a one-body structure, or a non-aggregated particle. For example, the single particle may be a single crystal. In embodiments, the single particle may be a particle including several crystals. The single particle may be in an isolated form. In embodiments, the single particle may be in the form in which about 2 to about 100 third primary particles NNP_3 are attached to one another.

The third particle PTC3 may be a nanomorphous positive electrode active material. The third particle PTC3 may include at least one third primary particle NNP_3. In an embodiment, the third particle PTC3 may be in the shape of a sphere or an oval (e.g., may have a generally spherical shape or a generally ovoid shape) in which third primary particles are aggregated or agglomerated. In another embodiment, the third particle PTC3 may not have a spherical shape but have an irregular shape even if the third primary particles NNP_3 agglomerate.

In an embodiment, the average particle diameter may indicate a particle diameter ($D_{50}$) if a cumulative volume is about 50 volume% in a particle size distribution. In an embodiment, the average particle diameter ($D_{50}$) of the third particle PTC3 may be a value measured using a particle size analyzer.

In an embodiment, the third particle PTC3 may have an average particle diameter of about 500 nm to about 2.5 $\mu$m, or about 1 $\mu$m. The size of at least one third primary particle NNP_3 constituting the third particle PTC3 may be measured using a scanning electron microscope (SEM). In an embodiment, the size of the third primary particle NNP_3 may indicate a diameter measured by randomly selecting about 30 third primary particles NNP_3 from an electron micrograph of a positive electrode active material. The third primary particles NNP_3 may be uniform (e.g., substantially uniform) in size. The third primary particle NNP_3 may have a size of about 100 nm to about 500 nm, or about 100 nm to about 200 nm.

The third particle PTC3 may be in the form of polycrystal and may include secondary particles in which at least two third primary particles NNP_3 are aggregated or agglomerated. For example, one third particle PTC3 may include a plurality of third primary particles NNP_3 aggregated or agglomerated together. The third particle PTC3 including the plurality of third primary particles NNP_3 may be in the shape of a sphere or an oval (e.g., may have a generally spherical shape or a generally ovoid shape).

In an embodiment, the average particle diameter may indicate a particle diameter ($D_{50}$) if a cumulative volume is about 50 volume% in a particle size distribution. In an embodiment, the average particle diameter ($D_{50}$) of the third particle PTC3 may be a value measured using a particle size analyzer.

The third particle PTC3 including at least one third primary particle NNP_3 may have an average particle diameter of about 50 nm to about 5 $\mu$m, about 100 nm to about 3 $\mu$m, about 500 nm to about 2.5 $\mu$m, about 3 $\mu$m to about 7 $\mu$m, about 4 $\mu$m to about 6 $\mu$m, or about 5 $\mu$m. The average particle diameter ($D_{50}$) of the third particle PTC3 may be smaller than the average particle diameter ($D_{50}$) of the second particle PTC2 described above.

The third particle PTC3 may include at least one primary particle (or single particle). The size of at least one third primary particle NNP_3 constituting the third particle PTC3 may be measured using a scanning electron microscope (SEM). In an embodiment, the size of the third primary particle NNP_3 may indicate a diameter measured by randomly selecting about 30 third primary particles NNP_3 from an electron micrograph of a positive electrode active material. The third primary particles NNP_3 may be uniform (e.g., substantially uniform) in size.

At least one third primary particle NNP_3 constituting the third particle PTC3 may have a size of about 100 nm to about 200 nm, about 50 nm to about 150 nm, about 50 nm to about 100 nm, about 100 nm to about 150 nm, or about 200 nm to about 300 nm.

In an embodiment, the third particle PTC3 may include a coating layer on a surface thereof. The coating layer may entirely cover the surface of the third particle PTC3, or may partially cover the surface of the third particle PTC3. For example, the coating layer may include carbon and/or a carbon-containing compound. The coating layer may further include at least one selected from the group consisting of an aluminium-containing compound, a titanium-containing compound, a magnesium-containing compound, and a vanadium-containing compound. Metal-containing compounds, such as aluminium-containing compounds, titanium-containing compounds, magnesium-containing compounds, and vanadium-containing compounds, may be, for example, metal oxides, metal hydroxides, metal carbonates, composites thereof, or mixtures thereof. The metal-containing compounds may further include other metals and/or non-metallic elements. For example, the metal-containing compounds may further include lithium. The third particle PTC3 may have improved structural stability and electrical conductivity through the coating layer.

In an embodiment, the third particle PTC3 may further include a grain boundary coating layer on a surface of each of the third primary particles NNP_3. The grain boundary coating layer may be present inside the third particle PTC3. The grain boundary coating layer may be formed to be applied along an interface between the third primary particles NNP_3 inside the third particle PTC3. For example, the grain boundary coating layer may indicate a material applied onto a grain boundary inside the third particle PTC3.

The grain boundary coating layer may include carbon and/or a carbon-containing compound. The grain boundary coating layer may further include at least one selected from the group consisting of an aluminium-containing compound, a titanium-containing compound, a magnesium-containing compound, and a vanadium-containing compound.

The inside of the third particle PTC3 described above may indicate the entire inside portion of the third particle PTC3 excluding the surface of the third particle PTC3. For example, the inside of the third particle PTC3 may indicate a region of the entire inside from about 10 nm in depth, or from about 10 nm to about 2 $\mu$m in depth, with respect to the surface of the third particle PTC3.

The third particle PTC3 may further include a grain boundary coating portion, and may thus have greater structural stability and have a uniform (e.g., substantially uniform) coating layer formed on the surface thereof. In embodiments, the third particle PTC3 may further include a grain boundary coating portion, and may thus have further improved electrical conductivity.

The third particle PTC3 may further include carbon derived from the coating layer and/or the grain boundary coating layer described above. The third particle PTC3 may have a carbon element content of about 0.5 wt% to about 10 wt%, about 1 wt% to about 3 wt%, or about 1.5 wt% to about 2.5 wt%. For example, the third particle PTC3 may have a greater content of carbon if in the form of a secondary particle than in the form of a single particle. Methods for measuring the carbon content dispersed on the surface or inside positive electrode active material may include Thermogravimetric Analysis (TGA), Elemental Analysis (CHNS), Raman Spectroscopy, X-ray Photoelectron Spectroscopy (XPS), Energy Dispersive X-ray Spectroscopy (EDS), and Transmission Electron Microscopy (TEM) with Electron Energy Loss Spectroscopy (EELS).

The third particle PTC3 may be in the shape of sphere (e.g., may have a generally spherical shape) in which a plurality of third primary particles NNP_3 are aggregated. The third particle PTC3 has the third primary particles NNP_3 closely aggregated, may thus exhibit the following characteristics. The third particle may keep the coating layer and/or the grain boundary coating layer described above well, and may thus have greater electrical conductivity and improved low-temperature characteristics. Due to the increased bindability of an electrode plate, binder capacity may be reduced. The third particle PTC3 may be in the shape of a sphere or an oval (e.g., may have a generally spherical shape or a generally ovoid shape).

The third particle PTC3 may have a porosity of about 20% to about 40%. Porosity (n) may be defined as the pore volume ($V_p$) divided by the total volume (Vt) of a particle (n = $V_p$ / Vt). The porosity of the active material particles may be measured using BET (Brunauer-Emmett-Teller) analysis, which determines the specific surface area and pore structure based on gas adsorption. By measuring the amount of gas adsorbed on the material's surface at different pressures, the BET method calculates the specific surface area (SSA) and, when combined with BJH (Barrett-Joyner-Halenda) analysis, provides insights into pore size distribution and pore volume. This method is particularly useful for analyzing nanometer-scale pores (0.5-300 nm) and is widely applied in lithium-ion battery materials to evaluate electrolyte infiltration and ion diffusion pathways. Measurement methods commonly used in the battery field, such as those described above, can be applied. A Span value of the third particle PTC3, analyzed through a particle size analyzer, may be about 0.3 to about 0.75.

Hereinafter, the positive electrode active material layer AML1 according to embodiments of the present disclosure will be described in more detail.

The positive electrode or positive electrode active material layer AML1 includes manganese (Mn). A total doping content of manganese (Mn) may be defined as the sum of a doping content M1 of manganese (Mn) included in the first positive electrode active material layer ATL1 and a doping content M2 of manganese (Mn) included in the second positive electrode active material layer ATL2. The doping content M1 of manganese (Mn) included in the first positive electrode active material layer ATL1 may be defined as the sum of a product of the manganese (Mn) doping content (z1 in Formula 1 described above) in the first particle PTC1 and a weight ratio of the first particle PTC1, and a product of the manganese (Mn) doping content (x2 in Formula 2 described above) in the second particle PTC2 and a weight ratio of the second particle PTC2. The doping content M2 of manganese (Mn) included in the second positive electrode active material layer ATL2 may be defined as a product of the manganese (Mn) doping content (z3 in Formula 3 described above) in the third particle PTC3 and a weight ratio of the third particle PTC3.

The total doping content of manganese (Mn) in the positive electrode active material layer AML1 may be about 0.50 to about 0.90, about 0.50 to about 0.70, about 0.60 to about 0.80, about 0.60 to about 0.70, or about 0.50 to about 0.60. The total doping content of manganese may be calculated using the equation:

Total Mn doping Content = [Number of Mn atoms in the first particle (z1) x Weight ratio of the first particle / Molecular weight of the first particle] + [Number of Mn atoms in the second particle (x2) x Weight ratio of the second particle / Molecular weight of the second particle] + [Number of Mn atoms in the third particle (z3) x Weight ratio of the third particle / Molecular weight of the third particle]

In the above equation, the weight ratio of the first particle may refer to the weight ratio of the first particle relative to the total weight of the first particle, the second particle, and the third particle.

The second particle PTC2 may be present in an amount of about 5 wt% to about 20 wt%, about 10 wt% to about 20 wt%, about 15 wt% to about 30 wt%, about 20 wt% to about 30 wt%, or about 25 wt% to about 25 wt%, with respect to a total weight of the first particle PTC1, the second particle PTC2, and the third particle PTC3 in the positive electrode active material layer AML1.

The positive electrode active material layer AML1 according to the present invention has a double layer structure in which the second positive electrode active material layer ATL2 is stacked on the first positive electrode active material layer ATL1. The positive electrode active material layer AML1 may include a functional additive ADD. The first positive electrode active material layer ATL1 may include a first functional additive ADD1, and the second positive electrode active material layer ATL2 may include a second functional additive ADD2. The functional additive ADD may indicate at least one of the first functional additive ADD1 or the second functional additive ADD2.

The functional additive may include a conductive material CDM (e.g., an electrically conductive material CDM) and a binder BND. The functional additive is included, and accordingly, the positive electrode active material layer may have improved performance. For example, materials in a positive electrode active material layer may be well bonded, the bindability of an electrode plate may be improved, and the conductivity (e.g., electrical conductivity) of a positive electrode active material layer may be improved.

The first particle PTC1 in the form of a secondary particle may have a smaller amount of the functional additive ADD required or utilized for an active material than the first particle PTC1 in the form of a single particle. Both the first particle PTC1 and the second particle PTC2 are included in the first positive electrode active material layer ATL1, and accordingly, a weight ratio of the functional additive ADD required or utilized for an active material layer may be reduced.

For example, a relatively large amount of binder BND1 may be required or utilized to attach the first particle PTC1 having a small average particle diameter to the current collector COL1, but a relatively small amount of binder BND may be required or utilized to attach the second particle PTC2 having a large average particle diameter to the current collector COL1. A weight ratio of the binder BND required or utilized through the first positive electrode active material layer ATL1 including the first particle PTC1 and the second particle PTC2 may be reduced.

The positive electrode active material layer AML1 of the present disclosure includes the first positive electrode active material layer ATL1, which may have a relatively small amount of functional additive required or utilized, and may thus improve energy density.

With the double layer structure applied, an electrode plate may be more easily prepared. The first positive electrode active material layer ATL1 in which the first particle PTC1 and the second particle PTC2 are mixed together are first stacked on a current collector, and the second positive electrode active material layer ATL2 is stacked on the first positive electrode active material layer ATL1. With the first positive electrode active material layer ATL1 having excellent bindability of an electrode plate being first stacked on a current collector, less of the binder BND may be required or utilized, resulting in improved energy density. The first positive electrode active material layer ATL1 is first stacked on a portion in contact with a current collector to improve the resistance (e.g., electrical resistance) of an electrode plate.

A weight ratio of the first binder BND1 that may be in the first positive electrode active material layer ATL1 may be about 1.2 wt% to about 2.0 wt%.

A weight ratio of the second binder BND2 that may be in the second positive electrode active material layer ATL2 may be about 2.0 wt% to about 3.0 wt%.

The weight ratio of the first binder BND1 that may be in the first positive electrode active material layer ATL1 may be lower than the weight ratio of the second binder BND2 that may be in the second positive electrode active material layer ATL2. In an embodiment, a ratio of the weight ratio of the second binder BND2 to the weight ratio of the first binder BND1 may be about 0.8 to about 2.6.

A weight ratio of the first conductive material CDM1 that may be in the first positive electrode active material layer ATL1 may be about 1.2 wt% to about 2.0 wt%.

A weight ratio of the second conductive material CDM2 that may be in the second positive electrode active material layer ATL2 may be about 2.0 wt% to about 3.0 wt%.

The weight ratio of the first conductive material CDM1 that may be in the first positive electrode active material layer ATL1 may be lower than the weight ratio of the second conductive material CDM2 that may be in the second positive electrode active material layer ATL2. In an embodiment, a ratio of the weight ratio of the second conductive material CDM2 to the weight ratio of the first conductive material CDM1 may be about 0.65 to about 4.5.

A weight ratio of the first functional additive ADD1 that may be in the first positive electrode active material layer ATL1 may be about 2.4 wt% to about 4.0 wt%.

A weight ratio of the second functional additive ADD2 that may be in the second positive electrode active material layer ATL2 may be about 4.0 wt% to about 6.0 wt%.

The weight ratio of the first functional additive ADD1 that may be in the first positive electrode active material layer ATL1 may be lower than the weight ratio of the second functional additive ADD2 that may be in the second positive electrode active material layer ATL2.

In an embodiment, the weight ratio of the second functional additive to the weight ratio of the first functional additive may be about 1.0 to about 2.0, about 1.5 to about 2.5, or about 1.5 to about 3.0.

The first positive electrode active material layer ATL1 may have a thickness T1. In an embodiment, T1 may increase with a rise in weight of the first particle PTC1 and the second particle PTC2 included in the first positive electrode active material layer ATL1. The second positive electrode active material layer ATL2 may have a thickness T2. In an embodiment, T2 may increase with a rise in weight of the third particle PTC3 included in the second positive electrode active material layer ATL2. In an embodiment, a ratio of T2 to T1 (T2/T1) may be about 0.4 to about 2.0, about 0.8 to about 1.5, about 0.8 to about 1.2, about 0.9 to about 1.2, or about 1. Within the ranges described above, stability and lifetime characteristics may be improved while excellent high voltage performance and energy density are maintained.

In an embodiment, the positive electrode active material layer AML1 of the present disclosure may have a pellet density (also referred to as a compressed density) of about 2.0 g/cc to about 2.5 g/cc. The pellet density may be determined by measuring the mass and volume of the electrode after calendaring (e.g., pressing) and is expressed in $g/cm^3$ (or g/cc). It is calculated as:

Pellet Density = Mass of the electrode active material layer (g) / Volume of electrode active material layer ($cm^3$)

The volume may be obtained by multiplying the electrode area (Width × Length) with its thickness measured using a micrometer. For high-precision analysis, methods such as X-ray CT, Mercury Porosimetry, and Helium Pycnometry may be used to assess internal porosity and density variations. Optimizing electrode density is crucial for achieving high energy density, proper electrolyte infiltration, and improved lithium-ion diffusion in lithium-ion battery electrodes.

In an embodiment, the first positive electrode active material layer ATL1 may have a loading level of about 5 $mg/cm^2$ to about 10 $mg/cm^2$. The second positive electrode active material layer ATL2 may have a loading level of about 5 $mg/cm^2$ to about 25 $mg/cm^2$. The loading level of an electrode may be determined by first obtaining a precisely cut sample from the coated electrode with a defined area (e.g., 1cm x 1cm). The total mass of this sample may then be measured using a precision balance. If the mass of the active material alone needs to be determined, the mass of an uncoated current collector with the same area may be separately measured and subtracted from the total mass. Next, the length and width of the sample may be measured to calculate its total area in $cm^2$. Finally, the loading level may be calculated using the formula:

Loading Level = Total mass of electrode sample (mg) / Electrode sample area ($cm^2$)

A rechargeable lithium battery including the positive electrode active material of the present disclosure may have improved low-temperature characteristics. In an embodiment, capacity at -20 °C relative to initial capacity (capacity at -20 °C/initial capacity) of the rechargeable lithium battery may be about 40% or greater. For example, capacity at -20 °C relative to initial capacity (capacity at -20 °C/initial capacity) of the rechargeable lithium battery of the present disclosure may be about 40% to about 100%, about 50% to about 100%, or about 96% to about 99%.

A rechargeable lithium battery including the positive electrode active material of the present disclosure may have improved operating voltage. In an embodiment, the rechargeable lithium battery of the present disclosure may have an operating voltage range of about 3 V to about 5 V. For example, the operating voltage range may be about 3 V to about 4.5 V, or about 3.5 V to about 4 V.

A rechargeable lithium battery including the positive electrode active material of the present disclosure may have improved lifetime characteristics. In an embodiment, the rechargeable lithium battery of the present disclosure may have a capacity retention of about 98% or greater after 50 times of charging/discharging at a constant current of 0.1 C at the voltage described above. For example, the capacity retention may be about 98% to about 100%, or about 99.8% to about 100%.

**Method for Preparing Positive Electrode Active Material**

Hereinafter, Preparation Examples, Examples, and Comparative Examples of the present disclosure will be described. However, the following Examples are presented only as embodiments of the present disclosure, and the present disclosure is not limited by the following Examples.

**Preparation Example 1: Preparation of First Particle PTC1 in the form of Secondary Particle**

A manganese iron phosphate precursor ($Mn_{0.6}Fe_{0.4}PO_4$), lithium carbonate, and titanium dioxide were mixed together at a molar ratio of 1:1.03:0.004. 10 wt% of glucose was further added to the resultant mixture. The slurry mixture was spray-dried and evaporated to dryness at a spray pressure of 0.5 MPa and a temperature of 230 °C. The dried mixture was fired at 750 °C for 10 hours in a nitrogen atmosphere to obtain a first particle in the form of a secondary particle. Primary particles in the first particle had an average size of about 50 nm to about 150 nm.

**Preparation Example 2: Preparation of Second Particle PTC2 in the form of Secondary Particle**

0.170 g of $MnSO_4H_2O$ and 0.228 g of $(NH_4)_2S_2O_8$ were dissolved in 100 ml of distilled water, sulfuric acid was added thereto to adjust the pH to 1, and the resultant mixture was subjected to a reaction at 130 °C for 10 hours to obtain a solid precipitate. The obtained precipitate was washed with distilled water several times and dried at 300 °C for 3 hours to obtain $MnO_2$ having an average particle diameter of 5 $\mu$m as a solid.
$Li_2CO_3$ and synthesized $MnO_2$ were mixed together such that Li and Mn were at a molar ratio of 1:2, and the resultant mixture was heated at 600 °C for 10 hours to synthesize $LiMn_2O_4$ particles having an average particle diameter of 7 $\mu$m and an average primary particle size of 0.5 $\mu$m to 2.5 $\mu$m.

**Preparation Example 3-1: Preparation of Third Particle PTC3 in the form of Single Particle**

A manganese iron phosphate precursor ($Mn_{0.6}Fe_{0.4}PO_4$), lithium carbonate, and titanium dioxide were mixed together at a molar ratio of 1:1.03:0.004. 10 wt% of glucose was added to the resultant mixture. The mixture was subjected to a wet grinding process through ball milling. The mixture was evaporated to dryness on a heating tray and then placed and dried in a vacuum oven at 120 °C for 4 hours. The dried mixture was fired at 750 °C for 10 hours in a nitrogen atmosphere. The fired product was ground to obtain a third particle in the form of a single particle. The third particle had an average size of about 100 nm to about 200 nm.

**Preparation Example 3-2: Preparation of Third Particle PTC3 in the form of Secondary Particle**

A manganese iron phosphate precursor ($Mn_{0.6}Fe_{0.4}PO_4$), lithium carbonate, and titanium dioxide were mixed together at a molar ratio of 1:1.03:0.004. 10 wt% of glucose was further added to the resultant mixture. The slurry mixture was spray-dried and evaporated to dryness at a spray pressure of 0.5 MPa and a temperature of 230 °C. The dried mixture was fired at 750 °C for 10 hours in a nitrogen atmosphere to obtain a third particle in the form of a secondary particle. Primary particles in the third particle had an average size of about 50 nm to about 150 nm.

**Preparation of Single Layer Electrode Plate Comparative Example 1-1**

The first particle of Preparation Example 1 and the second particle of Preparation Example 2 were mixed together at a weight ratio of 30:70 and dispersed in N-methylpyrrolidone along with a conductive material (carbon black) and a binder (polyvinylidene fluoride) to prepare a positive electrode active material slurry. The positive electrode active material slurry was applied onto a positive electrode current collector and dried to prepare a single layer electrode plate. The total Mn doping content for Comparative Example 1-1 was calculated as follows.
Given that the molecular weights of the first particle and the second particle are approximately 157.21 and 180, respectively, and the numbers of Mn atoms per mole of the first particle and the second particle are 0.6 and 2, respectively, the Mn doping content amount can be calculated using the following equation (described earlier in this specification):

Total Mn doping content = [(30 x 0.6) / 157.21] + ([70 x 2) / 180] = 0.1145 + 0.7778 = 0.8923 (which can be rounded to 0.9).

**Comparative Example 1-2**

Except that the first particle of Preparation Example 1 and the second particle of Preparation Example 2 were mixed together at a weight ratio of 42:58, a positive electrode active material slurry and a single layer electrode plate were prepared in substantially the same manner as in Comparative Example 1-1.

### Comparative Example 1-3

Except that the first particle of Preparation Example 1 and the second particle of Preparation Example 2 were mixed together at a weight ratio of 56:44, a positive electrode active material slurry and a single layer electrode plate were prepared in substantially the same manner as in Comparative Example 1-1.

### Comparative Example 1-4

Except that the first particle of Preparation Example 1 and the second particle of Preparation Example 2 were mixed together at a weight ratio of 70:30, a positive electrode active material slurry and a single layer electrode plate were prepared in substantially the same manner as in Comparative Example 1-1.

### Comparative Example 1-5

Except that the first particle of Preparation Example 1 and the second particle of Preparation Example 2 were mixed together at a weight ratio of 83:17, a positive electrode active material slurry and a single layer electrode plate were prepared in substantially the same manner as in Comparative Example 1-1.

### Comparative Example 1-6

Except that the first particle of Preparation Example 1 and the second particle of Preparation Example 2 were mixed together at a weight ratio of 95:5, a positive electrode active material slurry and a single layer electrode plate were prepared in substantially the same manner as in Comparative Example 1-1.

### Comparative Example 1-7

Except that the first particle of Preparation Example 1, the second particle of Preparation Example 2, and the third particle of Preparation Example 3-1 were mixed together at a weight ratio of 41.5:17:41.5, a positive electrode active material slurry and a single layer electrode plate were prepared in substantially the same manner as in Comparative Example 1-1.

### Preparation of Double Layer Electrode Plate

### Example 1-1

The first particle of Preparation Example 1 and the second particle of Preparation Example 2 were dispersed in N-methylpyrrolidone along with a conductive material (carbon black) and a binder (polyvinylidene fluoride) to prepare a first positive electrode active material slurry. The third particle of Preparation Example 3-1 was dispersed in N-methylpyrrolidone along with a conductive material (carbon black) and a binder (polyvinylidene fluoride) to prepare a second positive electrode active material slurry.
The first positive electrode active material slurry was applied onto a positive electrode current collector and dried to form a first positive electrode active material layer. The second positive electrode active material slurry was applied onto the first positive electrode active material layer and dried to form a second positive electrode active material layer.
In this case, an active material layer was formed such that the first particle, the second particle, and the third particle in the double layer positive electrode were present at a weight ratio of 41.5:17:41.5. Through a roll press, a positive electrode in which the current collector, the first positive electrode active material layer, and the second positive electrode active material layer were stacked in this order was prepared.

### Example 1-2

The first particle of Preparation Example 1 and the second particle of Preparation Example 2 were dispersed in N-methylpyrrolidone along with a conductive material (carbon black) and a binder (polyvinylidene fluoride) to prepare a first positive electrode active material slurry. The third particle of Preparation Example 3-2 was dispersed in N-methylpyrrolidone along with a conductive material (carbon black) and a binder (polyvinylidene fluoride) to prepare a second positive electrode active material slurry.
The first positive electrode active material slurry was applied onto a positive electrode current collector and dried to form a first positive electrode active material layer. The second positive electrode active material slurry was applied onto the first positive electrode active material layer and dried to form a second positive electrode active material layer.

In this case, an active material layer was formed such that the first particle, the second particle, and the third particle in the double layer positive electrode were present at a weight ratio of 41.5:17:41.5. Through a roll press, a positive electrode in which the current collector, the first positive electrode active material layer, and the second positive electrode active material layer were stacked in this order was prepared.

**Example 2-1**

The first particle of Preparation Example 1 and the second particle of Preparation Example 2 were dispersed in N-methylpyrrolidone along with a conductive material (carbon black) and a binder (polyvinylidene fluoride) to prepare a first positive electrode active material slurry. The third particle of Preparation Example 3-1 was dispersed in N-methylpyrrolidone along with a conductive material (carbon black) and a binder (polyvinylidene fluoride) to prepare a second positive electrode active material slurry.

The first positive electrode active material slurry was applied onto a positive electrode current collector and dried to form a first positive electrode active material layer. The second positive electrode active material slurry was applied onto the first positive electrode active material layer and dried to form a second positive electrode active material layer.

In this case, an active material layer was formed such that the first particle, the second particle, and the third particle in the double layer positive electrode were present at a weight ratio of 35:30:35. Through a roll press, a positive electrode in which the current collector, the first positive electrode active material layer, and the second positive electrode active material layer were stacked in this order was prepared.

**Example 2-2**

The first particle of Preparation Example 1 and the second particle of Preparation Example 2 were dispersed in N-methylpyrrolidone along with a conductive material (carbon black) and a binder (polyvinylidene fluoride) to prepare a first positive electrode active material slurry. The third particle of Preparation Example 3-2 was dispersed in N-methylpyrrolidone along with a conductive material (carbon black) and a binder (polyvinylidene fluoride) to prepare a second positive electrode active material slurry.

The first positive electrode active material slurry was applied onto a positive electrode current collector and dried to form a first positive electrode active material layer. The second positive electrode active material slurry was applied onto the first positive electrode active material layer and dried to form a second positive electrode active material layer.

In this case, an active material layer was formed such that the first particle, the second particle, and the third particle in the double layer positive electrode were present at a weight ratio of 35:30:35. Through a roll press, a positive electrode in which the current collector, the first positive electrode active material layer, and the second positive electrode active material layer were stacked in this order was prepared.

**Comparative Example 2-1**

The first particle of Preparation Example 1 and the second particle of Preparation Example 2 were dispersed in N-methylpyrrolidone along with a conductive material (carbon black) and a binder (polyvinylidene fluoride) to prepare a first positive electrode active material slurry. The third particle of Preparation Example 3-1 was dispersed in N-methylpyrrolidone along with a conductive material (carbon black) and a binder (polyvinylidene fluoride) to prepare a second positive electrode active material slurry.

Unlike Example 1-1, the second positive electrode active material slurry was first applied onto a positive electrode current collector and dried to form a first positive electrode active material layer. Thereafter, the first positive electrode active material slurry was applied onto the first positive electrode active material layer and dried to form a second positive electrode active material layer.

In this case, an active material layer was formed such that the first particle, the second particle, and the third particle in the double layer positive electrode were present at a weight ratio of 41.5:17:41.5. Through a roll press, a positive electrode in which the current collector, the first positive electrode active material layer, and the second positive electrode active material layer were stacked in this order was prepared.

**Comparative Example 2-2**

The first particle of Preparation Example 1 and the second particle of Preparation Example 2 were dispersed in N-methylpyrrolidone along with a conductive material (carbon black) and a binder (polyvinylidene fluoride) to prepare a first positive electrode active material slurry. The third particle of Preparation Example 3-2 was dispersed in N-methylpyrrolidone along with a conductive material (carbon black) and a binder (polyvinylidene fluoride) to prepare a second positive electrode active material slurry.

Unlike Example 1-2, the second positive electrode active material slurry was first applied onto a positive electrode current collector and dried to form a first positive electrode active material layer. Thereafter, the first positive electrode active material slurry was applied onto the first positive electrode active material layer and dried to form a second positive electrode active material layer.

In this case, an active material layer was formed such that the first particle, the second particle, and the third particle in the double layer positive electrode were present at a weight ratio of 41.5:17:41.5. Through a roll press, a positive electrode in which the current collector, the first positive electrode active material layer, and the second positive electrode active material layer were stacked in this order was prepared.

## Preparation of Negative Electrode

Graphite, a binder, and a conductive material were mixed together in an N-methylpyrrolidone solvent to prepare a negative electrode active material slurry. The negative electrode active material slurry was applied onto a copper current collector, dried, and rolled to prepare a negative electrode.

## Preparation of Rechargeable Lithium Battery

A coin half cell was prepared using the prepared positive electrode and negative electrode. A polypropylene film (Celgard 3510) was used as a separator. As an electrolyte, an electrolyte solution obtained by mixing 1.3 M $LiPF_6$ together with a mixed solvent of ethylene carbonate (EC), diethyl carbonate (DEC), and fluoroethylene carbonate (FEC) (volume ratio: 2:6:2) was used.

## Evaluation Example 1: Analysis of Positive Electrode Active Material Surface

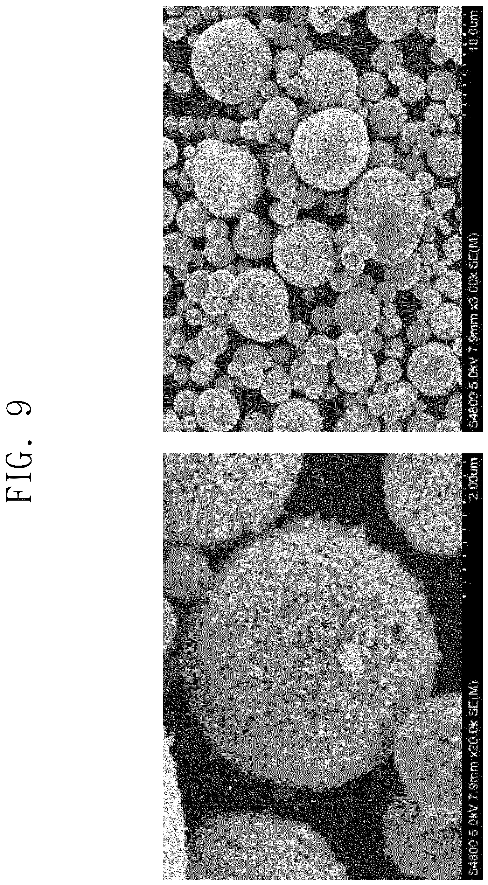

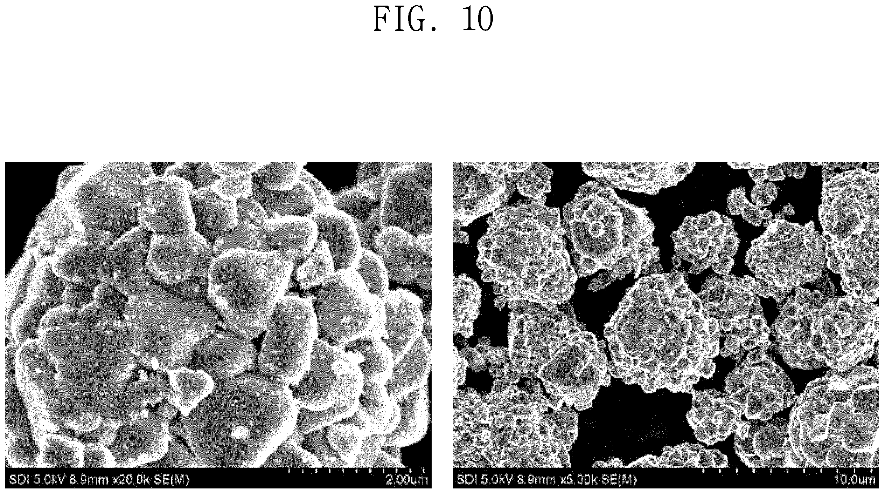

SEM images of the first particle prepared in Preparation Example 1 are shown in FIG. 9. SEM images of the second particle prepared in Preparation Example 2 is shown in FIG. 10. Referring to FIG. 9, it is seen that the first particle according to an embodiment of the present disclosure is in the form of a spherical secondary particle in which nano-sized fine primary particles are aggregated or agglomerated. Referring to FIG. 10, it can be seen that the second particle according to an embodiment of the present disclosure is in the form of a secondary particle in which a plurality of primary particles are aggregated or agglomerated. Compared to the first particle, the second particle takes a variety of forms and has large primary particles.

## Evaluation Example 2: Analysis of Positive Electrode Properties

Pellet density (PD) and energy density (ED) of the positive electrode active material layers prepared through Examples 1-1 to 2-2 and Comparative Examples 1-1 to 2-2 were measured, and the results are shown in Table 1.

**Table 1**

| | Electrode plate structure | Powder | | | | | |
|---|---|---|---|---|---|---|---|
| | | First particle | Second particle | Third particle | Mn content | PD (g/cc ) | ED (Wh/kg) |
| Comparative Example 1-1 | Single layer | 30% | 70% | - | 0.9 | 2.60 | 443 |
| Comparative Example 1-2 | Single layer | 42% | 58% | - | 0.8 | 2.57 | 456 |
| Comparative Example 1-3 | Single layer | 56% | 44% | - | 0.7 | 2.52 | 471 |
| Comparative Example 1-4 | Single layer | 70% | 30% | - | 0.6 | 2.43 | 486 |
| Comparative Example 1-5 | Single layer | 83% | 17% | - | 0.5 | 2.40 | 499 |
| Comparative Example 1-6 | Single layer | 95% | 5% | - | 0.4 | 2.25 | 510 |
| Comparative Example 1-7 | Single layer | 41.5% | 17% | 41.5% | 0.5 | 2.45 | 497 |
| Comparative Example 2-1 | Double layer | 41.5% | 17 | 41.5% | 0.5 | 2.41 | 490 |
| Comparative Example 2-2 | Double layer | 41.5% | 17 | 41.5% | 0.5 | 2.41 | 490 |
| Example 1-1 | Double layer | 41.5% | 17% | 41.5% | 0.5 | 2.43 | 498 |
| Example 1-2 | Double layer | 41.5% | 17% | 41.5% | 0.5 | 2.42 | 499 |

(continued)

| | Electrode plate structure | Powder | | | | | |
|---|---|---|---|---|---|---|---|
| | | First particle | Second particle | Third particle | Mn content | PD (g/cc ) | ED (Wh/kg) |
| Example 2-1 | Double layer | 35% | 30% | 35% | 0.6 | 2.42 | 486 |
| Example 2-2 | Double layer | 35% | 30% | 35% | 0.6 | 2.43 | 487 |

Referring to Table 1, it can be seen that the positive electrode active material layers according to Examples 1-1 to 2-2 have higher energy density than Comparative Examples 1-1 to 1-4. In addition, even when compared to Comparative Examples 1-4, 1-5, or 1-7, each having a single layer structure, the positive electrode active material layers according to Examples 1-1 to 2-2 are capable of keeping the pellet density and the energy density at similar levels. It is determined that the positive electrode active material layers according to Examples above have a high energy density of 485 Wh/kg or greater, indicating that the positive electrode active material layers have an energy density suitable for commercial use.

**Evaluation Example 3: Evaluation of Battery Properties**

Properties of rechargeable lithium batteries prepared using the positive electrodes of Examples 1-1 to 2-2 and Comparative Examples 1-1 to 2-2 were evaluated.

For initial charging/discharging, the rechargeable lithium batteries were initially charged at a constant current of 0.2 C and a constant voltage of 4.25 V, and after 10 minutes of rest, discharged up to 2.5 V at a constant current of 0.2 C. Thereafter, the charging/discharging was repeated 50 times at 45 °C and 1.0 C/1.0 C. In addition, a coin cell was additionally prepared and measured at -20 °C for a capacity of 0.2 C. The results of evaluating the battery properties are shown in Table 2 below.

**Table 2**

| | 0.2 C charge amount (mAh/g) | 0.2 C discharge amount (mAh/g) | 0.2 C efficiency | -20 capacity (mAh/g) | Average voltage (V) | 1 C lifetime (%,@50cy) | 2 C lifetime (%,@50cy ) | DCIR, SOC50 (Ω,0.2 C/1.0 C) |
|---|---|---|---|---|---|---|---|---|
| Comparative Example 1-1 | 125.3 | 121.3 | 96.8% | 74 | 3.87 | 99.6 | 92.6 | 20.3 |
| Comparative Example 1-2 | 130.6 | 125.9 | 96.4% | 83 | 3.82 | 99.1 | 92.2 | 23.2 |
| Comparative Example 1-3 | 136.8 | 131.2 | 96.0% | 93 | 3.77 | 98.6 | 91.7 | 26.6 |
| Comparative Example 1-4 | 142.9 | 136.6 | 95.6% | 104 | 3.71 | 98.3 | 91.4 | 29.9 |
| Comparative Example 1-5 | 148.7 | 141.6 | 95.2% | 113 | 3.66 | 97.5 | 90.7 | 33.1 |
| Comparative Example 1-6 | 154.0 | 146.2 | 94.9% | 122 | 3.62 | 95.6 | 88.9 | 36.0 |
| Comparative Example 1-7 | 148.2 | 140.3 | 94.7% | 101 | 3.66 | 96.9 | 90.1 | 35.5 |
| Comparative Example 2-1 | 146.1 | 139.2 | 95.3% | 69 | 3.66 | 97.6 | 90.4 | 35.2 |
| Comparative Example 2-2 | 146.2 | 140.1 | 95.8% | 107 | 3.66 | 98.1 | 90.8 | 33.1 |
| Example 1-1 | 148.5 | 141.8 | 95.5% | 78 | 3.66 | 98.7 | 91.8 | 23.5 |
| Example 1-2 | 148.7 | 142.0 | 95.5% | 118 | 3.66 | 99.1 | 92.2 | 21.6 |
| Example 2-1 | 143.1 | 137.1 | 95.8% | 70 | 3.71 | 99.2 | 92.3 | 19.8 |

(continued)

|  | 0.2 C charge amount (mAh/g) | 0.2 C discharge amount (mAh/g) | 0.2 C efficiency | -20 capacity (mAh/g) | Average voltage (V) | 1 C lifetime (%,@50cy) | 2 C lifetime (%,@50cy ) | DCIR, SOC50 ($\Omega$,0.2 C/1.0 C) |
|---|---|---|---|---|---|---|---|---|
| Example 2-2 | 143.4 | 137.5 | 95.9% | 108 | 3.71 | 99.6 | 92.9 | 17.7 |

Referring to Table 2, it can be seen that the positive electrodes according to Examples 1-1 to 2-2 had improved capacity retention after at least 50 cycles at 1 C rate and 2 C rate, compared to the single layer positive electrodes of Comparative Examples 1-4, 1-5, and 1-7.

Compared to a single layer structure including the same active material, when a double layer structure is applied, active materials have improved bindability and stability, thereby improving battery performance. Functional additives are required in lower amounts in the preparation of positive electrodes, and in turn, energy density may be improved.

In addition, the second particle having low resistance is included in the first positive electrode active material layer in contact with the current collector, thereby reducing the resistance of the positive electrode. It can be seen that when compared to the positive electrodes according to Comparative Examples 1-4, 1-5, and 1-7, the positive electrode according to Examples of the present disclosure has significantly reduced resistance, and even when compared to Comparative Examples 2-1 and 2-2, each having a double layer structure, the positive electrode according to Examples of the present disclosure has significantly reduced resistance.

Examples 1-1 to 2-2 are positive electrodes in which the first particle, the second particle, and the third particle are suitably or appropriately mixed together, and may be used as long-life positive electrodes having excellent characteristics considering average voltage, energy density, and lifetime characteristics overall.

**Evaluation Example 4: Content of Functional Additive in Active Material Layer**

Weight ratios of functional additives required for preparing the positive electrodes in the single layer structures of Comparative Examples 1-1 to 1-7 were measured.

The weight ratios of the functional additives in the first positive electrode active material layers and the weight ratios of the functional additives in the second positive electrode active material layers required for preparing the positive electrodes in the double layer structures of Comparative Examples 2-1 and 2-2 were measured.

The weight ratios of the functional additives in the first positive electrode active material layers and the weight ratios of the functional additives in the second positive electrode active material layers in the positive electrodes of Examples 1-1 to 2-2 were measured. The weight ratios of the functional additives in the active material layers are shown in Table 3 below.

**Table 3**

|  | Electrode plate structure | Weight ratio of functional additive in active material layer | |
|---|---|---|---|
|  |  | Positive electrode active material layer AML1 | |
|  |  | First positive electrode active material layer ATL1 | Second positive electrode active material layer ATL2 |
| Comparative Example 1-1 | Single layer | 2.4 wt% | |
| Comparative Example 1-2 | Single layer | 2.4 wt% | |
| Comparative Example 1-3 | Single layer | 2.4 wt% | |
| Comparative Example 1-4 | Single layer | 2.4 wt% | |
| Comparative Example 1-5 | Single layer | 2.4 wt% | |
| Comparative Example 1-6 | Single layer | 2.4 wt% | |
| Comparative Example 1-7 | Single layer | 2.4 wt% | |
| Comparative Example 2-1 | Double layer | 4.0 wt% | 2.4 wt% |
| Comparative Example 2-2 | Double layer | 2.4 wt% | 2.4 wt% |
| Example 1-1 | Double layer | 2.4 wt% | 4.0 wt% |
| Example 1-2 | Double layer | 2.4 wt% | 2.4 wt% |

(continued)

| | Electrode plate structure | Weight ratio of functional additive in active material layer | |
|---|---|---|---|
| | | Positive electrode active material layer AML1 | |
| | | First positive electrode active material layer ATL1 | Second positive electrode active material layer ATL2 |
| Example 2-1 | Double layer | 2.4 wt% | 4.0 wt% |
| Example 2-2 | Double layer | 2.4 wt% | 2.4 wt% |

Referring to the Examples of the present disclosure, the weight ratio of functional additive in the first positive electrode active material layer may be lower than the weight ratio of functional additive in the second positive electrode active material layer. According to another Example of the present disclosure, the weight ratio of functional additive in the first positive electrode active material layer may be the same as the weight ratio of functional additive in the second positive electrode active material layer. The functional additive may be required in a lower amount to stack the first positive electrode active material layer on the current collector, and in turn, preparing an electrode plate may be facilitated by first forming the first positive electrode active material layer in combination with the first positive electrode active material slurry, which is easy to prepare the positive electrode.

Unlike the Examples of the present disclosure, in Comparative Example 2-1, the active materials forming the first positive electrode active material layer and the active materials forming the second positive electrode active material layer were formed in reverse. In this case, it can be seen that functional additives may be required in large quantities to form the first positive electrode active material layer on the current collector.

A positive electrode according to the present disclosure includes a first positive electrode active material layer including an olivine-based first particle having a size of several micrometers and a spinel-based second particle having a size of several micrometers, and a second positive electrode active material layer including an olivine-based third particle having a size of hundreds of nanometers to several micrometers and stacked on the first active material layer, and may thus have improved pellet density, capacity, and energy density. In the positive electrode according to embodiments of the present disclosure, an electrode plate may be readily prepared and have improved resistance. A rechargeable lithium battery according to the present disclosure may have relatively improved lifetime.

The descriptions described above are example embodiments for implementing the subject matter of the present disclosure. The present disclosure will include both the embodiments described above and embodiments that may be easily modified or simply changed in design. In addition, the present disclosure will also include technologies that may be easily modified and implemented using embodiments. Therefore, the scope of the present disclosure should not be limited to the embodiments described above, but should be defined by the following claims as well as the equivalents thereof.

Certain embodiments are set out in the following clauses:

Clause 1. A positive electrode for a rechargeable lithium battery, comprising: a current collector; a first positive electrode active material layer on the current collector; and a second positive electrode active material layer on the first positive electrode active material layer,

wherein the first positive electrode active material layer comprises a first particle comprising a compound represented by Formula 1 below and having an olivine structure, a second particle comprising a compound represented by Formula 2 below and having a spinel structure, and a first functional additive,

the second positive electrode active material layer comprises a third particle comprising a compound represented by Formula 3 below and having an olivine structure, and a second functional additive,

the first functional additive and the second functional additive each comprise a conductive material and a binder, and

the first functional additive in the first positive electrode active material layer has a lower weight ratio than the second functional additive in the second positive electrode active material layer,

Formula 1 $\quad Li_{a1}Mn_{z1}Fe_{x1}B1_{y1}PO_{4-c1}$

wherein in Formula 1 above, B1 is at least one element selected from the group consisting of Al, Ti, V, and Mg, and $0.8 < a1 \leq 1.2$, $0.4 \leq z1 \leq 0.8$, $0.2 \leq x1 \leq 0.6$, $0.001 \leq y1 \leq 0.05$, and $0 \leq c1 \leq 0.05$ are satisfied,

Formula 2 $\quad Li_{a2}Mn_{x2}B2_{y2}O_{4-c2}$

wherein in Formula 2 above, B2 is at least one element selected from the group consisting of Al and Mg, and $0.8 < a2 \leq 1.2$, $1.9 \leq x2 \leq 2.05$, $0.001 \leq y2 \leq 0.05$, and $0 \leq c2 \leq 0.05$ are satisfied, and

$$\text{Formula 3} \qquad Li_{a3}Mn_{z3}Fe_{x3}B3_{y3}PO_{4-c3}$$

wherein in Formula 3 above, B3 is at least one element selected from the group consisting of Al, Ti, V, and Mg, and $0.8 < a3 \leq 1.2$, $0.4 \leq z3 \leq 0.8$, $0 \leq x3 \leq 0.6$, $0.001 \leq y3 \leq 0.05$, and $0 \leq c3 \leq 0.05$ are satisfied.

Clause 2. The positive electrode for a rechargeable lithium battery of Clause 1, wherein the binder comprises at least one selected from the group consisting of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon.

Clause 3. The positive electrode for a rechargeable lithium battery of Clause 1 or Clause 2, wherein a total doping content of manganese (Mn) in the positive electrode is about 0.50 to about 0.60.

Clause 4. The positive electrode for a rechargeable lithium battery of any preceding Clause, wherein the second particle is in the form of a secondary particle in which a plurality of primary particles are aggregated, and the secondary particle has an average particle diameter ($D_{50}$) of about 3 $\mu$m to about 10 $\mu$m.

Clause 5. A rechargeable lithium battery comprising the positive electrode as hereinbefore described, including in any one of Clauses 1 to 4, and/or as claimed in any of the accompanying claims.

**Claims**

1. A positive electrode for a rechargeable lithium battery, comprising:

   a current collector;
   a first positive electrode active material layer on the current collector; and
   a second positive electrode active material layer on the first positive electrode active material layer,
   wherein the first positive electrode active material layer comprises a first particle comprising a compound represented by Formula 1 below and having an olivine structure, and a second particle comprising a compound represented by Formula 2 below and having a spinel structure,
   the second positive electrode active material layer comprises a third particle comprising a compound represented by Formula 3 below and having an olivine structure, and
   the first particle is in the form of a secondary particle in which a plurality of primary particles are aggregated or agglomerated,

   $$\text{Formula 1} \qquad Li_{a1}Mn_{z1}Fe_{x1}B1_{y1}PO_{4-c1}$$

   wherein in Formula 1 above, B1 is at least one element selected from the group consisting of Al, Ti, V, and Mg, and $0.8 < a1 \leq 1.2$, $0.4 \leq z1 \leq 0.8$, $0.2 \leq x1 \leq 0.6$, $0 \leq y1 \leq 0.05$, and $0 \leq c1 \leq 0.05$ are satisfied,

   $$\text{Formula 2} \qquad Li_{a2}Mn_{x2}B2_{y2}O_{4-c2}$$

   wherein in Formula 2 above, B2 is at least one element selected from the group consisting of Al and Mg, and $0.8 < a2 \leq 1.2$, $1.9 \leq x2 \leq 2.05$, $0 \leq y2 \leq 0.05$, and $0 \leq c2 \leq 0.05$ are satisfied, and

   $$\text{Formula 3} \qquad Li_{a3}Mn_{z3}Fe_{x3}B3_{y3}PO_{4-c3}$$

   wherein in Formula 3 above, B3 is at least one element selected from the group consisting of Al, Ti, V, and Mg, and $0.8 < a3 \leq 1.2$, $0.4 \leq z3 \leq 0.8$, $0 \leq x3 \leq 0.6$, $0 \leq y3 \leq 0.05$, and $0 \leq c3 \leq 0.05$ are satisfied.

2. The positive electrode for a rechargeable lithium battery as claimed in claim 1, wherein the third particle is in the form of a secondary particle in which a plurality of primary particles are aggregated,

   the plurality of primary particles of the third particle have an average size of about 50 nm to about 150 nm, and
   the third particle has an average particle diameter ($D_{50}$) of about 3 $\mu$m to about 7 $\mu$m.

3. The positive electrode for a rechargeable lithium battery as claimed in claim 1, wherein the third particle is in the form of a single particle, and
the third particle has an average particle diameter ($D_{50}$) of about 0.5 $\mu$m to about 2.5 $\mu$m.

4. The positive electrode for a rechargeable lithium battery as claimed in any preceding claim, wherein with respect to a total weight of the first particle, the second particle, and the third particle in the positive electrode, a weight ratio of the second particle is about 15 wt% to about 30 wt%.

5. The positive electrode for a rechargeable lithium battery as claimed in any preceding claim, wherein a total doping content of manganese (Mn) in the positive electrode is about 0.50 to about 0.60.

6. The positive electrode for a rechargeable lithium battery as claimed in any preceding claim, wherein a thickness ratio of the second positive electrode active material layer to the first positive electrode active material layer is about 0.8 to about 1.2.

7. The positive electrode for a rechargeable lithium battery as claimed in any preceding claim, wherein the plurality of primary particles of the first particle have an average size of about 50 nm to about 150 nm, and
the first particle has an average particle diameter ($D_{50}$) of about 3 $\mu$m to about 7 $\mu$m.

8. The positive electrode for a rechargeable lithium battery as claimed in any preceding claim, wherein the first particle has a porosity of about 20% to about 40%.

9. The positive electrode for a rechargeable lithium battery as claimed in any preceding claim, wherein a Span value of the first particle, analyzed through a particle size analyzer, is about 0.3 to about 0.75.

10. The positive electrode for a rechargeable lithium battery as claimed in any preceding claim, wherein the second particle is in the form of a secondary particle in which a plurality of primary particles are aggregated or agglomerated, and
the secondary particle has an average particle diameter ($D_{50}$) of about 3 $\mu$m to about 10 $\mu$m.

11. A positive electrode for a rechargeable lithium battery, comprising:

a current collector;
a first positive electrode active material layer on the current collector; and
a second positive electrode active material layer on the first positive electrode active material layer,
wherein the first positive electrode active material layer comprises a first particle comprising a compound represented by Formula 1 below and having an olivine structure, a second particle comprising a compound represented by Formula 2 below and having a spinel structure, and a first functional additive,
the second positive electrode active material layer comprises a third particle comprising a compound represented by Formula 3 below and having an olivine structure, and a second functional additive,
the first functional additive and the second functional additive each comprise a conductive material and a binder, and
the first functional additive in the first positive electrode active material layer has a lower weight ratio than the second functional additive in the second positive electrode active material layer,

Formula 1 $\quad\quad\quad\quad$ $Li_{a1}Mn_{z1}Fe_{x1}B1_{y1}PO_{4-c1}$

wherein in Formula 1 above, B1 is at least one element selected from the group consisting of Al, Ti, V, and Mg, and
$0.8<a1\leq1.2$, $0.4\leq z1\leq0.8$, $0.2\leq x1\leq0.6$, $0\leq y1\leq0.05$, and $0\leq c1\leq0.05$ are satisfied,

Formula 2 $\quad\quad\quad\quad$ $Li_{a2}Mn_{x2}B2_{y2}O_{4-c2}$

wherein in Formula 2 above, B2 is at least one element selected from the group consisting of Al and Mg, and
$0.8<a2\leq1.2$, $1.9\leq x2\leq2.05$, $0\leq y2\leq0.05$, and $0\leq c2\leq0.05$ are satisfied, and

Formula 3 $\quad\quad\quad\quad$ $Li_{a3}Mn_{z3}Fe_{x3}B3_{y3}PO_{4-c3}$

wherein in Formula 3 above, B3 is at least one element selected from the group consisting of Al, Ti, V, and Mg, and 0.8<a3≤1.2, 0.4≤z3≤0.8, 0≤x3≤0.6, 0≤y3≤0.05, and 0≤c3≤0.05 are satisfied.

12. The positive electrode for a rechargeable lithium battery as claimed in claim 11, wherein the weight ratio of the second functional additive to the weight ratio of the first functional additive is about 1.5 to about 3.0.

13. The positive electrode for a rechargeable lithium battery as claimed in claim 11 or claim 12, wherein the weight ratio of the first functional additive is about 2.4 wt% to about 4.0 wt%, and/or
wherein the weight ratio of the second functional additive is about 4.0 wt% to about 6.0 wt%.

14. The positive electrode for a rechargeable lithium battery as claimed in any one of claims 11 to 13, wherein with respect to a total weight of the first particle, the second particle, and the third particle in the positive electrode, a total weight of the second particle is about 15 wt% to about 30 wt%.

15. The positive electrode for a rechargeable lithium battery as claimed in any one of claims 11 to 14, wherein a thickness ratio of the second positive electrode active material layer to the first positive electrode active material layer is about 0.8 to about 1.2.

# FIG. 1

# FIG. 2

FIG. 3

# FIG. 4

# FIG. 5

# FIG. 6

10

ATL2 ⎫
       ⎬ AML1
ATL1 ⎭

COL1

# FIG. 7

FIG. 8A

# FIG. 8B

ATL2

PTC3(SP3)  PTC3(SP3)

BND(BND2)

ADD2

CDM(CDM2)

# FIG. 9

FIG. 10

FIG. 11A

FIG. 11B